# EUROPÄISCHE PATENTSCHRIFT

(11) **EP 3 003 633 B1**
(45) Veröffentlichungstag und Bekanntmachung des Hinweises auf die Patenterteilung: **27.03.2019**
(21) Anmeldenummer: 13765685.6
(22) Anmeldetag: 13.09.2013
(51) Int. Cl.: B23K 26/04

(54) **VORRICHTUNG UND VERFAHREN ZUR BESTIMMUNG DER FOKUSPOSITION EINES HOCHENERGIESTRAHLS**
DEVICE AND METHOD FOR DETERMINING THE FOCUS POSITION OF A HIGH ENERGY BEAM
DISPOSITIF ET PROCÉDÉ POUR DÉTERMINER LA POSITION FOCALE D'UN FAISCEAU D'ÉNERGIE À HAUTE DENSITÉ

(30) Priorität: 29.05.2013 DE 102013210078
(43) Veröffentlichungstag der Anmeldung: 13.04.2016
(73) Patentinhaber: Trumpf Werkzeugmaschinen GmbH + Co. KG, 71254 Ditzingen (DE)
(72) Erfinder: REGAARD, Boris, 70499 Stuttgart (DE)
(74) Vertreter: Kohler Schmid Möbus Patentanwälte
(86) Internationale Anmeldenummer: PCT/EP2013/069029
(87) Internationale Veröffentlichungsnummer: WO 2014/191061

(56) Entgegenhaltungen:
- WO-A1-2009/113701
- WO-A1-2012/101533
- DE-A1- 19 914 984
- US-A- 4 383 168

## Beschreibung

Die vorliegende Erfindung betrifft eine Vorrichtung zur Bestimmung einer Fokusposition eines Hochenergiestrahls, insbesondere eines Laserstrahls, in Strahlrichtung des Hochenergiestrahls relativ zu einem Werkstück und/oder relativ zu einer Referenzkontur der Vorrichtung, umfassend: ein Fokussierelement zur Fokussierung des Hochenergiestrahls auf das Werkstück, sowie eine Bilderfassungseinrichtung zur Erfassung eines zu überwachenden Bereichs an der Oberfläche des Werkstücks und/oder der Referenzkontur mittels eines durch das Fokussierelement hindurch verlaufenden Beobachtungsstrahlengangs. Die Erfindung betrifft auch ein Verfahren zum Bestimmen einer Fokusposition eines Hochenergiestrahls, insbesondere eines Laserstrahls, in Strahlrichtung des Hochenergiestrahls relativ zu einem Werkstück und/oder relativ zu einer Referenzkontur einer Vorrichtung, die ein Fokussierelement zur Fokussierung des Hochenergiestrahls auf das Werkstück aufweist, das Verfahren umfassend: Erfassen eines zu überwachenden Bereichs an der Oberfläche des Werkstücks und/oder der Referenzkontur mittels eines durch das Fokussierelement hindurch verlaufenden Beobachtungsstrahlengangs. Bei der Vorrichtung kann es sich beispielsweise um einen Bearbeitungskopf, insbesondere um einen Laserbearbeitungskopf, handeln. Eine solche Vorrichtung und ein solches Verfahren sind aus der US 4 383 168 A bekannt geworden.

Für die Werkstückbearbeitung ist die Fokusposition bzw. die Lage der Fokusebene eines für die Werkstückbearbeitung verwendeten Hochenergiestrahls ein wichtiger Parameter. Die Lage der Fokusebene bzw. die Lage der Fokusposition in Ausbreitungsrichtung des Hochenergiestrahls ist abhängig von der Divergenz bzw. der Konvergenz des Hochenergiestrahls vor dem Fokussierelement sowie von der Brennweite des Fokussierelements für die verwendete Hochenergiestrahlung, genauer gesagt für den Wellenlängenbereich der Hochenergiestrahlung bzw. bei Verwendung eines Laserstrahls für dessen Arbeitswellenlänge.

Die Divergenz bzw. Konvergenz des Hochenergiestrahls ist in der Regel gut kontrollierbar und nach einer Grundjustage nur geringen Änderungen unterworfen. Kritisch bei großen Strahlleistungen und insbesondere bei CO₂-Laserstrahlung ist jedoch die Änderung der Brennweite des Fokussierelements während der Werkstückbearbeitung. Wird eine Linse als Fokussierelement eingesetzt, bildet sich durch die inhomogene Erwärmung und Abkühlung der Linse ein radialer Temperaturgradient aus, der zu einer Änderung des Brechungsindex n der Linse führt, welcher von der radialen Koordinate abhängig ist (d.h. n = n(r)). Die Brechungsindexänderung bei der Werkstückbearbeitung führt typischer Weise zu einer Verkürzung der Brennweite (so genannte thermische Linse). Die tatsächliche Brennweite f_{FL} der Fokussierlinse ist damit u.a. eine Funktion der Strahlleistung P_{L} und der Strahlform (z.B. dem Strahldurchmesser D_{R}), dem Verschmutzungsgrad der Fokussierlinse und der Zeit: f_{L} = f(P_{L}, D_{R}, t, ...). Zur Bestimmung der Fokusposition bzw. der Lage der Fokusebene während der Werkstückbearbeitung ist es daher in der Regel erforderlich, die tatsächliche Brennweite des Fokussierelements zu berücksichtigen.

Zur Bestimmung der Fokuslage eines Hochenergiestrahls in Strahlrichtung ist es u.a. bekannt, eine Vermessung des Strahlengangs bzw. der Strahlkaustik mittels einer geeigneten Messvorrichtung vorzunehmen oder ggf. die Strahlungsleistung lediglich in der Nähe der Strahltaille zu erfassen. Auch ist es möglich, bei mehreren unterschiedlich gewählten Abständen zwischen Fokussierelement und Werkstück jeweils einen Schnitt in das Werkstück einzubringen und anhand der Breite des Schnittes auf die Fokuslage relativ zum Werkstück zu schließen. Die oben beschriebenen Möglichkeiten erlauben es aber typischer Weise nicht, die Fokuslage on-line, d.h. während der Werkstückbearbeitung, zu erfassen.

Aus der WO 2011/009594 A1 ist ein Laserbearbeitungskopf zur Bearbeitung eines Werkstücks mittels eines Laserstrahls bekannt geworden. Der Laserbearbeitungskopf weist eine Kamera mit einer Abbildungsoptik zur Beobachtung eines Bearbeitungsbereichs des Werkstücks sowie eine Fokussierlinse zur Fokussierung des Laserstrahls auf die Werkstückoberfläche oder auf eine relativ zur Werkstückoberfläche definierte Lage auf. Weiterhin beschreibt die WO 2011/009594 A1 eine Auswerteeinheit, die ausgebildet ist, anhand eines Verstellwegs der Abbildungsoptik in Richtung der optischen Achse, der benötigt wird, um bei einer Verschiebung des Brennpunkts der Fokussierlinse das Kamerabild wieder scharf einzustellen, einen Korrektur-Verstellweg zu berechnen, welcher eine Brennpunktverschiebung der Fokussieroptik relativ zur Werkstückoberfläche oder zu der relativ zur Werkstückoberfläche definierten Lage kompensiert.

Die DE 10 2010 017 316 A1 beschreibt ein System, welches eine Schweißvorrichtung aufweist, die eingerichtet ist, eine Schweißraupe auf ein Werkstück aufzutragen. Das System kann mehrere Kameras aufweisen, die auf die Schweißraupe gerichtet und eingerichtet sind, eine entsprechende Anzahl von Bildern zu erzeugen. Eine Steuereinrichtung erzeugt anhand der Bilder ein stereoskopisches Bild der Schweißraupe und stellt auf der Grundlage des stereoskopischen Bildes einen Parameter der Schweißraupenauftragung ein. An Stelle von mehreren Kameras kann auch eine einzelne Kamera verwendet werden, um Bilder aus zwei verschiedenen Perspektiven bzw. Blickrichtungen aufzunehmen sowie eine differentielle Analyse der Bilder durchzuführen bzw. um ein stereoskopisches Bild zu erzeugen.

Aus der DE 10 2005 032 946 A1 ist eine Vorrichtung zur Bearbeitung eines Objektes mittels Laserstrahlung bekannt geworden, welche eine Beobachtungseinrichtung zur Abbildung des Objektes sowie eine Laser-Scan-Einrichtung aufweist. Die Beobachtungseinrichtung kann als Stereomikroskop mit zwei Abbildungsstrahlengängen und zwei Okularen ausgebildet sein, um das Objekt in einem Vorbereitungsmodus stereoskopisch zu beobachten. Durch eine optische Kopplungseinrichtung kann durch dieselben Okulare auch der Verlauf des Bearbeitungsprozesses beim Betrieb der Laser-Scan-Einrichtung verfolgt werden.

In der DE 10 2011 016 519 A1 sind ein Verfahren und eine Vorrichtung zum Steuern der Bearbeitung eines Werkstücks mittels eines hochenergetischen Bearbeitungsstrahls beschrieben, bei dem der Bearbeitungsstrahl durch eine Linse hindurchtritt, die zum Verschieben einer Auftreffstelle des Bearbeitungsstrahls auf das Werkstück senkrecht zu ihrer optischen Achse bewegt werden kann. In einem Beispiel ist eine Überwachungskamera zur Erzeugung eines elektronisch auswertbaren Bildes vorgesehen, deren Abbildungsstrahlengang durch die Linse auf die Auftreffstelle fokussiert wird.

In der EP 2 456 592 B1 ist ein Laserbearbeitungskopf beschrieben, der eine Fokussieroptik zur Fokussierung eines Arbeitslaserstrahls auf die Werkstückoberfläche oder auf eine relativ zur Werkstückoberfläche definierte Lage sowie eine Kamera mit einer davor im Strahlengang angeordneten Abbildungsoptik zur Beobachtung eines Bearbeitungsbereichs des Werkstücks aufweist. Es ist eine Auswerteeinheit vorgesehen, die ausgebildet ist, anhand eines Verstellweges der Abbildungsoptik in Richtung der optischen Achse, der dazu nötig ist, bei einer Verschiebung des Brennpunkts der Fokussierlinse das Kamerabild wieder scharf einzustellen, einen Korrektur-Verstellweg zu berechnen, der eine Brennpunktverschiebung der Fokussieroptik relativ zur Werkstückoberfläche oder zu einer relativ zur Werkstückoberfläche definierten Lage kompensiert.

### Aufgabe der Erfindung

Der Erfindung liegt die Aufgabe zugrunde, eine Vorrichtung und ein Verfahren bereitzustellen, welche eine zuverlässige Bestimmung einer Fokusposition während des Bearbeitens eines Werkstücks mit einem Hochenergiestrahl ermöglichen.

### Gegenstand der Erfindung

Diese Aufgabe wird gelöst durch eine Vorrichtung der eingangs genannten Art, bei der die Bilderfassungseinrichtung zur Bildung mindestens eines Beobachtungsstrahls ausgebildet ist, der einer nicht koaxial bzw. nicht parallel zur Strahlrichtung des Hochenergiestrahls verlaufenden Beobachtungsrichtung zugeordnet ist und eine Abbildungsoptik zur Erzeugung mindestens eines Bildes des zu überwachenden Bereichs und/oder der Referenzkontur aus der mindestens einen Beobachtungsrichtung umfasst, wobei die Vorrichtung eine Auswerteeinrichtung umfasst, die zur Bestimmung der Fokusposition des Hochenergiestrahls durch Auswertung des mindestens eines aufgenommenen Bildes ausgebildet bzw. programmiert ist.

Das zur Bestimmung der Fokusposition in Strahlrichtung des Hochenergiestrahls vorgeschlagene Messprinzip basiert auf der Erfassung mindestens eines Bildes des zu überwachenden Bereichs bzw. der Referenzkontur aus mindestens einem Blickwinkel bzw. aus mindestens einer Beobachtungsrichtung nicht koaxial zum Hochenergiestrahl, d.h. der Teil des Beobachtungsstrahlengangs, der das Fokussierelement durchlaufen hat, verläuft unter einem Winkel zur optischen Achse des Fokussierelements. Anhand eines solchen Beobachtungsstrahls können bei geeigneter Auswertung des aufgenommenen Bildes Veränderungen der Brennweite des Fokussierelements oder ggf. des Objektabstands, d.h. des Abstands zwischen Werkstück und Fokussierelement erkannt, die Fokusposition in Strahlrichtung des Laserstrahls bestimmt und falls erforderlich korrigiert werden.

Bei einer Ausführungsform ist die Auswerteinrichtung ausgebildet, die Fokusposition in Strahlrichtung des Hochenergiestrahls anhand einer Position der Referenzkontur in dem mindestens einen aufgenommenen Bild zu bestimmen. In diesem Fall wird eine relativ zur Vorrichtung statisch angeordnete Referenzkontur bzw. Referenzgeometrie, die beispielsweise bei einer Vorrichtung in Form eines Laserbearbeitungskopfs durch eine Düseninnenkontur einer Laserbearbeitungsdüse gebildet werden kann, zur Bestimmung der Fokusposition genutzt. Die Referenzkontur weist einen konstanten Abstand in Strahlrichtung zum Fokussierelement, beispielsweise einer Fokussierlinse, auf. Eine Änderung der Brennweite des Fokussierelements, z.B. durch eine thermische Belastung, führt zu einer lateralen Verschiebung der Referenzgeometrie im aufgenommenen Bild. Anhand der Größe der lateralen Verschiebung der Position der Referenzgeometrie im aufgenommenen Bild kann die Fokusposition bestimmt werden. Auch kann anhand der Richtung der lateralen Verschiebung auf die Richtung der Verschiebung der Fokusposition aus einer Soll-Fokusposition geschlossen werden. Zu diesem Zweck kann beispielsweise die Abweichung bzw. der laterale Versatz zu einer Referenzposition der Referenzkontur bei einem nicht thermisch belasteten Fokussierelement bestimmt werden. Die Referenzposition bei der (bekannten) Brennweite des Fokussierelements im kalten Zustand, d.h. ohne die Beaufschlagung mit einem Hochenergiestrahl, kann vor der Auswertung des Bildes bestimmt und in einer der Auswerteeinrichtung zugeordneten Speichereinrichtung beispielsweise in Form eines Referenzbildes oder einer Position, z.B. Flächenschwerpunkts, der geometrischen Mitte oder eines spezifischen Geometriemerkmals, beispielsweise einer Geometriekante, hinterlegt werden.

Bei einer weiteren Ausführungsform ist die Bilderfassungseinrichtung zur Bildung mindestens eines weiteren Beobachtungsstrahls ausgebildet, der einer weiteren Beobachtungsrichtung zugeordnet ist, wobei die Abbildungsoptik zur Erzeugung von mindestens zwei Bildern des zu überwachenden Bereichs und/oder der Referenzkontur aus den mindestens zwei unterschiedlichen Beobachtungsrichtungen ausgebildet ist, und wobei die Auswerteeinrichtung zur Bestimmung der Fokusposition des Hochenergiestrahls durch vergleichende Auswertung der aufgenommenen Bilder ausgebildet ist.

Das bei dieser Ausführungsform zur Bestimmung der Fokusposition vorgeschlagene Messprinzip basiert auf einer stereoskopischen Abstandsmessung durch das Fokussierelement hindurch, d.h. auf der Aufnahme von zwei oder mehr Bildern des zu überwachenden Bereichs an der Oberfläche des Werkstücks bzw. der in der Vorrichtung angebrachten Referenzkontur aus zwei oder mehr unterschiedlichen Beobachtungsrichtungen bzw. Blickwinkeln. Die Abbildungsoptik bildet zu diesem Zweck typischer Weise zwei oder mehr in der Regel außermittig (d.h. nicht durch die zentrale Achse) des Fokussierelements laufende und somit unter einem jeweils unterschiedlichen Winkel zum Werkstück verlaufende Beobachtungsstrahlen bzw.

Strahlenbündel des Abbildungs- bzw. Beobachtungsstrahlengangs auf voneinander beabstandeten Bereichen einer oder mehrerer Detektorflächen ab. Alternativ zur Erzeugung von zwei oder mehr Bildern an voneinander beabstandeten Bereichen der Detektorfläche(n) können zwei oder mehr Bilder auch an demselben Bereich einer Detektorfläche zeitlich kurz aufeinander folgend erfasst werden, wie weiter unten näher beschrieben wird. Die vergleichende Auswertung von drei oder mehr Bildern ermöglicht es, die Signifikanz des Vergleichs und damit die Genauigkeit der Bestimmung der Fokusposition zu erhöhen.

Für die möglichst präzise Bestimmung der Fokusposition ist es günstig, wenn die Blickwinkel bzw. die Beobachtungsrichtungen, unter denen die Bilder aufgenommen werden, sich möglichst stark voneinander unterscheiden. Ein großer Unterschied zwischen den Blickwinkeln kann insbesondere erhalten werden, wenn die beiden Bilder des zu überwachenden Oberflächenbereichs des Werkstücks zwei sich diametral gegenüber liegende Randbereiche des Fokussierelements durchlaufen. Als Fokussierelement dienen typischer Weise eine oder mehrere Fokussierlinsen oder ein Fokussierspiegel, insbesondere ein Off-Axis-Parabolspiegel.

Wenn sich das Werkstück in der Brennebene der Fokussierlinse befindet, sind die Abbildungen bzw. die Bilder des zu überwachenden Bereichs des Werkstücks aus den Randbereichen der Fokussierlinse identisch. Die beiden Bilder des zu überwachenden Bereichs an der Oberfläche des Werkstücks sind aber lateral zueinander verschoben, wenn sich das Werkstück außerhalb, d.h. oberhalb oder unterhalb, der Brennebene der Fokussierlinse befindet. Anhand der Größe der lateralen Verschiebung zwischen den beiden Bildern kann auf die Abweichung bzw. den Abstand der Fokusposition bzw. der Fokusebene zum Werkstück geschlossen werden.

Entsprechend kann auch anhand des lateralen Abstands zwischen zwei Bildern der in der Vorrichtung gebildeten Referenzkontur auf die Fokuslage relativ zur Vorrichtung bzw. zur Referenzkontur bzw. Referenzgeometrie geschlossen werden. Um dies zu erreichen, kann der Abstand zwischen den beiden Bildern der Referenzkontur der (bekannten) Brennweite des Fokussierelements im kalten Zustand, d.h. ohne die Beaufschlagung mit einem Hochenergiestrahl, zugeordnet werden. Die sich durch die Änderung der Brennweite ergebende Änderung des Abstands zwischen den beiden Bildern kann einer entsprechenden Änderung der Fokusposition zugeordnet werden. Auf diese Weise ist eine Brennweitenmessung des Fokussierelements bzw. eine Bestimmung der Fokusposition relativ zur Vorrichtung und damit unabhängig vom Werkstück möglich.

Zur Bestimmung der lateralen Abweichung zwischen den Bildern kann eine Ortskorrelation der beiden Bilder beispielsweise durch einen Blockmatching-Algorithmus oder durch eine örtliche Frequenzanalyse durchgeführt und die Position maximaler Übereinstimmung errechnet werden. Im Gegensatz zu der in der WO 2011/009594 A1 beschriebenen Messung der Bildschärfe erlaubt die stereoskopische Messung eine Bestimmung der Brennweitenabweichung sowohl im Betrag als auch in der Richtung (d.h. auf das Werkstück zu oder von diesem weg). Hierdurch ist eine schnelle Regelung der Fokuslage bzw. Fokusposition möglich (s.u.), ohne auf eine iterative Nachführung angewiesen zu sein. Es versteht sich, dass bei der stereoskopischen Abbildung auch der Einfluss weiterer sich im Abbildungsstrahlengang befindlicher optischer Elemente auf die Änderung der Brennweite bzw. die Änderung der Fokuslage berücksichtigt wird. Beispielsweise gilt dies für die thermische Linse, die von einem Schutzglas erzeugt wird, welches den Abschluss der Vorrichtung, z.B. in Form eines Bearbeitungskopfes, zum Werkstück hin bildet.

Bei einer Ausführungsform weist die Vorrichtung eine Beleuchtungsquelle zur Beleuchtung der Oberfläche des Werkstücks insbesondere in dem zu überwachenden Bereich und/oder der Referenzkontur auf. Die Beleuchtungsquelle kann beispielsweise eine Beleuchtung bei Wellenlängen zwischen 360nm und 800nm (VIS) oder ca. 800 nm und ca. 1000 nm (NIR) erzeugen. Die Beleuchtung dient dazu, eine Abbildung von Konturen an der Oberfläche des Werkstücks in dem zu überwachenden Bereich bzw. der an der Vorrichtung gebildeten Referenzkontur zu erhalten. Die Beleuchtung kann koaxial zur Hochenergiestrahlung erfolgen, d.h. in Form einer Auflichtbeleuchtung. Es ist aber auch möglich, die Beleuchtungsquelle zur Beleuchtung einer definierten Messposition innerhalb der Vorrichtung zu nutzen, an welcher die Referenzkontur bzw. Referenzgeometrie gebildet ist. Die Referenzkontur kann beispielsweise von einer gerichteten Beleuchtungsquelle bestrahlt und von der Bilderfassungseinrichtung erfasst werden. Weiterhin kann eine zur Führung eines Prozessgases am Schneidkopf angebrachte Schneiddüse als Referenzkontur verwendet werden.

Bei einer Ausführungsform weist der Beobachtungs- bzw. Abbildungsstrahlengang der Bilderfassungseinrichtung zur Erfassung des zu überwachenden Bereichs an der Oberfläche des Werkstücks einen Bilderfassungsbereich auf, der von der Referenzkontur begrenzt ist. In diesem Fall kann die Beleuchtungsquelle beispielsweise das Werkstück oder eine andere Fläche unterhalb der Referenzkontur beleuchten und die Referenzkontur bzw. die Referenzgeometrie bildet die Begrenzung der Beleuchtung bzw. die Begrenzung des von der Bilderfassungseinrichtung erfassten Bilderfassungsbereichs.

Bei einer Ausführungsform ist die Auswerteeinrichtung zur Bestimmung der Fokusposition des Hochenergiestrahls relativ zum Werkstück durch vergleichende Auswertung der Bilder der (rauen) Oberfläche des Werkstücks in dem zu überwachenden Bereich ausgebildet. In diesem Fall wird für die vergleichende Auswertung bzw. Korrelation der beiden Bilder ausgenutzt, dass die Oberfläche des in der Regel plattenförmigen Werkstücks nicht vollständig glatt ist sondern (zumindest in mikroskopischen Größenordnungen) eine Rauigkeit und damit eine ortsabhängig variierende Oberflächenstruktur aufweist. Anhand eines lateralen Abstandes zwischen den Oberflächenstrukturen in den aus unterschiedlichen Beobachtungsrichtungen aufgenommenen Bildern kann die Fokuslage bestimmt werden.

In der Regel umfasst der zu beobachtende Bereich des Werkstücks einen Wechselwirkungsbereich des Hochenergiestrahls mit dem Werkstück. Alternativ oder zusätzlich zur stereoskopischen Korrelation der Bilder der Konturen der rauen Werkstückoberfläche kann ggf. auch das Prozesseigenleuchten (thermische Strahlung, Plasmastrahlung) für die stereoskopische Auswertung der beiden Bilder genutzt werden. In beiden Fällen kann zur Beleuchtung des Werkstücks auch eine strukturierte Beleuchtung eingesetzt werden, beispielsweise in Form eines fokussierten Beleuchtungsstrahls in der Nähe des Wechselwirkungsbereichs.

Bei einer Ausführungsform weist die Abbildungsoptik mindestens zwei einer jeweiligen Beobachtungsrichtung zugeordnete abbildende optische Elemente auf. Bei den abbildenden optischen Elementen kann es sich beispielsweise um Linsenelemente handeln. Die Linsenelemente können in einem Abstand voneinander angeordnet sein, der näherungsweise dem Abstand zwischen den beiden Bildern auf der Detektorfläche entspricht. Jedes der beiden abbildenden optischen Elemente erzeugt hierbei einen eigenen Abbildungs- bzw. Beobachtungsstrahl zur Erzeugung des jeweils zugehörigen Bildes auf dem zugehörigen Bereich der Detektorfläche. Die beiden Linsenelemente sind typischer Weise außermittig, d.h. nicht koaxial zum Strahlengang des Hochenergiestrahls bzw. zu dessen Verlängerung im Beobachtungsstrahlengang angeordnet. Auf diese Weise können zwei oder mehr Strahlenbündel abgebildet werden, die jeweils einen Randbereich der Fokussierlinse durchlaufen und somit eine Beobachtung unter zwei oder mehr unterschiedlichen Beobachtungswinkeln bzw. Beobachtungsrichtungen ermöglichen. Als abbildende optische Elemente können beispielsweise sphärische oder asphärische Linsen verwendet werden. Es versteht sich, dass ggf. eines der abbildenden optischen Elemente koaxial zum Strahlengang des Hochenergiestrahls angeordnet werden kann, wie weiter unten näher dargestellt wird.

Bei einer Weiterbildung sind die abbildenden optischen Elemente als Zylinderlinsen ausgebildet. Zusätzlich zu ersten Zylinderlinsen, die eine Krümmung bzw. eine abbildende Wirkung entlang einer ersten Achse erzeugen, weist die Abbildungsoptik in der Regel mindestens eine zweite Zylinderlinse auf, welche eine abbildende Wirkung entlang einer zweiten, zur ersten senkrechten Achse aufweist. Durch die gekreuzten Zylinderlinsen kann die Abbildungsoptik einerseits kostengünstig hergestellt werden und andererseits kann der verfügbare Abbildungsquerschnitt gut genutzt werden.

Bei einer Weiterbildung sind die abbildenden optischen Elemente in einem Linsenarray bzw. in einer Rasteranordnung angeordnet. Eine Rasteranordnung von Linsenelementen ("Lenslet" bzw. Linsenarray), z.B. von Mikrolinsen, auch in Form von zwei gekreuzten Zylinderlinsenarrays, kann genutzt werden, um eine ortsaufgelöste Bestimmung von Wellenfrontaberrationen zu ermöglichen, welche durch das thermisch belastete Linsenelement hervorgerufen werden. Durch die Bestimmung der Wellenfrontaberrationen kann die Strahlfokussierung des Bearbeitungsstrahls mit Hilfe des Fokussierelements durch eine geeignete dem Fokussierelement vorgeschaltete Strahlformung optimiert werden und/oder es kann eine koaxiale Beobachtung des Werkstücks für die Prozessüberwachung ggf. bei einer anderen Wellenlänge durch eine geeignete Korrektur des Beobachtungsstrahlengangs verbessert werden. Die Korrektur sowohl der Strahlform des Bearbeitungsstrahls als auch der Beobachtung des Werkstücks kann beispielsweise durch eine geeignete Anpassung von Blendendurchmessern, durch eine Änderung des Abstandes von Linsen im Strahlengang, durch verformbare Spiegel, etc. realisiert werden. Das Messprinzip für die Bestimmung der Wellenfrontaberrationen stellt eine Abwandlung des Shack-Hartmann Sensors dar, bei dem eine lokale Wellenfrontneigung durch eine Verschiebung von Fokuspunkten, die von den Linsen eines zweidimensionalen Linsenarrays erzeugt werden, in der Brennebene des Linsenarrays vermessen werden.

In einer weiteren Ausführungsform weist die Abbildungsoptik eine Umlenkeinrichtung mit mindestens zwei einer jeweiligen Beobachtungsrichtung zugeordneten Strahlumlenkbereichen auf. Die Umlenkeinrichtung kann als geometrischer Strahlteiler dienen. Beispielsweise kann die einfallende Strahlung auf unterschiedliche Bereiche eines abbildenden optischen Elements, beispielsweise eines Linsenelements, gelenkt werden. Zwei von der Umlenkeinrichtung umgelenkte und an einander diametral gegenüber liegenden Bereichen des Linsenelements auftreffende Strahlenbündel werden von dem Linsenelement auf unterschiedliche, voneinander beabstandete Bereiche in dessen Brennebene fokussiert, an denen die Bilder des zu überwachenden Bereichs bzw. der Referenzkontur erzeugt werden.

Bei einer Weiterbildung weist die Umlenkeinrichtung mindestens ein Umlenkprisma auf. An dem Umlenkprisma können mehrere, insbesondere alle Strahlumlenkbereiche gebildet werden, die beispielsweise als unter einem Winkel zur Strahlachse ausgerichtete Facetten bzw. Oberflächenbereiche des Prismas ausgebildet sein können. Das Umlenkprisma kann insbesondere einen zentralen Bereich aufweisen, in dem dieses als planparallele Platte ausgebildet ist und an dem keine Umlenkung vorgenommen wird. Die Strahlumlenkbereiche bzw. Strahlumlenkflächen können um den zentralen Bereich herum angeordnet sein, so dass sich insgesamt eine näherungsweise konkave oder konvexe Geometrie des Umlenkprismas ergibt. Alternativ zur Verwendung eines Umlenkprismas kann die Umlenkeinrichtung auch reflektierend ausgebildet sein und beispielsweise mehrere Strahlumlenkbereiche in Form von Spiegelflächen aufweisen, welche die Beobachtungsstrahlung in unterschiedliche Richtungen umlenken, die einer jeweiligen Beobachtungsrichtung zugeordnet sind.

Bei einer weiteren Ausführungsform weist die Bilderfassungseinrichtung zur Bildung der mindestens zwei einer jeweiligen Beobachtungsrichtung zugeordneten Beobachtungsstrahlen eine Strahlversatzeinrichtung auf. Die Strahlversatzeinrichtung kann insbesondere im fokussierten Beleuchtungsstrahlengang der Abbildungsoptik, beispielsweise zwischen zwei ein Strahlteleskop bildenden optischen Elementen, angeordnet sein. Die Strahlversatzeinrichtung kann beispielsweise einen, zwei oder mehr Blöcke aus einem für die Beleuchtungsstrahlung transparenten Material, z.B. aus Quarzglas, aufweisen, die als planparallele Blöcke bzw. Platten ausgebildet sind, um einen Parallelversatz der auftreffenden Beobachtungsstrahlung herzustellen. Die Blöcke sind typischer Weise zueinander verkippt angeordnet, um zu erreichen, dass die zwei oder mehr Beobachtungsstrahlen an unterschiedlichen Bereichen der Detektorfläche auftreffen, um zwei oder mehr lateral versetzte Bilder zu erzeugen.

Die Bilderfassungseinrichtung kann zur Bildung der mindestens zwei einer jeweiligen Beobachtungsrichtung zugeordneten Beobachtungsstrahlen einen Strahlteiler aufweisen. Der Strahlteiler kann die Beobachtungsstrahlung anhand mindestens einer sich über den Strahlquerschnitt verändernden Eigenschaft in zwei oder mehr Beobachtungsstrahlen aufteilen. Bei der Eigenschaft kann es sich beispielsweise um die Polarisationsrichtung, die Leistung oder die Wellenlänge der Beobachtungsstrahlung handeln, die über den Querschnitt des Beobachtungsstrahlengangs variiert. Für die Abbildung der jeweiligen Beobachtungsstrahlen auf eine Detektorfläche kann jeweils ein eigenes abbildendes optisches Element vorgesehen sein, es ist aber auch möglich, die Abbildung der Beobachtungsstrahlen mittels einer gemeinsamen Abbildungsoptik beispielsweise in Form einer gemeinsamen Fokussierlinse vorzunehmen.

Bei einer weiteren Ausführungsform ist die Bilderfassungseinrichtung zur Bildung der mindestens zwei einer jeweiligen Beobachtungsrichtung zugeordneten Beobachtungsstrahlen zu unterschiedlichen Zeitpunkten ausgebildet. Bei dieser Ausführungsform werden die zwei oder mehr Bilder mit einem (kurzen) von der Bildwiederholrate des Detektors bzw. der Kamera der Bilderfassungseinrichtung abhängigen zeitlichen Versatz (typischer Weise im Bereich weniger Mikrosekunden oder Millisekunden) aufgenommen. Auf diese Weise können die zwei oder mehr Bilder an ein- und derselben Stelle einer Detektorfläche erzeugt werden, d.h. eine räumliche Separation der Beobachtungsstrahlen auf der Detektorfläche ist bei dieser Ausführungsform nicht erforderlich. Zur zeitlich aufeinander folgenden Aufnahme der Bilder wird der Beobachtungsstrahlengang teilweise abgeschattet, wobei für die Aufnahme eines Bildes typischer Weise ein jeweils unterschiedlicher Teil des Beobachtungsstrahlengangs abgeschattet wird.

In einer weiteren Ausführungsform weist die Bilderfassungseinrichtung zur Bildung der mindestens zwei einer jeweiligen Beobachtungsrichtung zugeordneten Beobachtungsstrahlen mindestens eine Blende auf, die insbesondere zur Bildung der zwei oder mehr Beobachtungsstrahlen zu unterschiedlichen Zeitpunkten ausgebildet ist bzw. angesteuert werden kann. Die Blende kann zu diesem Zweck beispielsweise als verschiebbare, drehbare oder schaltbare Blende ausgebildet sein. Die Blende kann zur teilweisen Abschattung des Beobachtungsstrahlengangs dienen, wobei durch eine geeignete Ansteuerung der Blende zeitlich aufeinander folgend unterschiedliche Teile des Beobachtungsstrahlengangs abgeschattet werden können. Eine Blendenöffnung, durch welche die Beobachtungsstrahlung hindurch tritt, erzeugt typischer Weise einen Beobachtungsstrahl, der einer Beobachtungsrichtung zugeordnet ist. Die Blende kann in Form eines elektronischen Shutters (z.B. eines LCD-Bildschirms mit schaltbaren Pixeln) oder eines mechanischen Shutters (z.B. einer in der Blendenebene bewegbaren (z.B. drehbaren oder verschiebbaren) Lochblende) ausgebildet sein und dazu dienen, unterschiedliche Bereiche des Beobachtungsstrahlengangs zeitlich aufeinander folgend zu verdecken bzw. zu öffnen, um zeitlich aufeinander folgend zwei oder mehr Bilder aus unterschiedlichen Beobachtungsrichtungen zu erzeugen. Es versteht sich, dass zur hochauflösenden Beobachtung des zu überwachenden Bereichs des Werkstücks mit dem Ziel einer Prozessbeobachtung weitere Bereiche der Apertur des Beobachtungsstrahlengangs geöffnet oder geschlossen werden können.

In einer weiteren Ausführungsform ist die Abbildungsoptik zur Erzeugung von mindestens drei Bildern des zu überwachenden Bereichs und/oder der Referenzkontur aus unterschiedlichen Beobachtungsrichtungen ausgebildet. Wie weiter oben dargestellt wurde, ist es für die Bestimmung der Fokusposition in der Regel ausreichend, den lateralen Versatz entlang einer Richtung zwischen zwei aus unterschiedlichen Beobachtungsrichtungen aufgenommenen Bildern zu bestimmen. Die Verwendung von drei oder mehr Bildern kann aber ggf. die Signifikanz des Vergleichs bzw. die Genauigkeit der Bestimmung der Fokusposition erhöhen. Die Erzeugung von mindestens einem weiteren (dritten, vierten,...) Bild kann auch dazu dienen, weitere Informationen über das Fokussierelement zu erhalten, insbesondere um dessen Wellenfrontaberrationen zu bestimmen, wie weiter oben dargestellt wurde. Hierdurch kann die Änderung der Brennweite eines mit hoher Laserleistung durchstrahlten Fokussierelements bzw. einer Fokussierlinse ortsabhängig, d.h. abhängig von der radialen Position bezüglich der optischen Achse des Fokussierelements, bestimmt werden. Mit Hilfe von mehr als zwei abbildenden optischen Elementen (z.B. in Form eines Linsenarrays) bzw. mit Hilfe von mehr als zwei Strahlumlenkbereichen können drei oder mehr Bilder der Werkstückoberfläche und/oder der Referenzkontur erzeugt und auf einem Detektor, z.B. einer Kamera, abgebildet werden.

Bei einer weiteren Ausführungsform umfasst die Vorrichtung mindestens ein abbildendes optisches Element zur Erzeugung eines Bildes des zu überwachenden Bereichs an der Oberfläche des Werkstücks aus einer Beobachtungsrichtung koaxial zum Hochenergiestrahl. Wie weiter oben dargestellt wurde, enthält der zu überwachende Bereich in der Regel einen Wechselwirkungsbereich zwischen dem Hochenergiestrahl und dem Werkstück. Mit Hilfe des abbildenden optischen Elements kann das Prozesseigenleuchten des Bearbeitungsprozesses im VIS-Bereich und/oder ein Wärmebild des zu überwachenden Bereichs im NIR/IR-Bereich erstellt werden, um Informationen über den Bearbeitungsprozess, beispielsweise einen Schweiß- oder einen Schneidprozess, zu erhalten. Diese auch als Prozessbeobachtung bezeichnete Überwachung des Bearbeitungsprozesses kann zusätzlich zur stereoskopischen Erfassung des zu überwachenden Bereichs bzw. der Referenzkontur erfolgen.

Bei dem abbildenden optischen Element kann es sich um ein Linsenelement handeln, welches typischer Weise einen größeren Durchmesser als die den jeweiligen Beobachtungsrichtungen zugeordneten Linsenelemente aufweist, um eine höhere Auflösung bei der Abbildung zu erhalten. Das abbildende optische Element kann ggf. auch für die Erzeugung von zwei oder mehr Bildern dienen, die aus unterschiedlichen Beobachtungsrichtungen aufgenommen werden, welche nicht koaxial bzw. parallel zur Ausbreitungsrichtung des Hochenergiestrahls verlaufen. Dies ist in der Regel der Fall, wenn die Abbildungsoptik ein Umlenkprisma wie oben beschrieben aufweist.

Bei einer Ausführungsform ist die Auswerteeinrichtung zur vergleichenden Auswertung des koaxial zum Hochenergiestrahl aufgenommenen Bildes und mindestens eines nicht koaxial zum Hochenergiestrahl aufgenommenen Bildes ausgebildet. Auch anhand der vergleichenden Auswertung eines koaxial und mindestens eines nicht koaxial zum Hochenergiestrahl aufgenommenen Bildes lässt sich die Fokusposition des Hochenergiestrahls auf die weiter oben beschriebene Weise bestimmen.

In einer weiteren Ausführungsform ist die Bilderfassungseinrichtung zur Aufnahme des mindestens einen Bildes durch eine Düsenöffnung einer Laserbearbeitungsdüse zum Durchtritt des Laserstrahls auf das Werkstück ausgebildet. Bei dieser so genannten koaxialen Beobachtung werden die Bilder des zu überwachenden Bereichs des Werkstücks durch die Bearbeitungsdüse (z.B. Laserschneiddüse) sowie durch das Fokussierelement hindurch von einer oder von mehreren Kameras aufgenommen. Bei der Vorrichtung handelt es sich in diesem Fall typischer Weise um einen Laserbearbeitungskopf.

Bei einer Weiterbildung bildet die Düseninnenkontur der Laserbearbeitungsdüse, insbesondere einer Laserschneiddüse, die Referenzkontur bzw. Referenzgeometrie, welche für eine stereoskopische Bildauswertung genutzt wird. Beispielsweise kann der laterale Abstand zwischen zwei Bildern der in der Regel kreisförmigen Düseninnenkontur bestimmt werden, um eine Grobjustage der Fokusposition vorzunehmen. Hierbei kann ausgenutzt werden, dass die vergleichende Auswertung der Bilder der Innenkontur der Düsenöffnung sehr schnell durchgeführt werden kann, da lediglich der Abstand zwischen den beiden typischer Weise kreisförmigen Begrenzungen des durch die Düsenöffnung aufgenommenen Bildes des Werkstücks bestimmt werden muss. Die Bestimmung eines lateralen Versatzes zwischen den Bildern der Werkstückoberfläche, bei der die Konturen bzw. die Oberflächengeometrie des Werkstücks ausgewertet werden muss, erfordert in der Regel mehr Rechenzeit und kann für eine Feinjustage der Fokusposition genutzt werden.

In einer Ausführungsform weist die Bilderfassungseinrichtung mindestens einen Detektor, insbesondere eine Kamera, mit einer Detektorfläche auf, an der das mindestens eine Bild erzeugt wird. Für die Erfassung mehrerer Bilder kann ein- und dieselbe Detektorfläche z.B. in Form eines CCD-Chips oder eines CMOS-Chips der Kamera dienen, wobei die Bilder an unterschiedlichen Teilbereichen der Detektorfläche erzeugt werden. Insbesondere in diesem Fall ist es günstig, wenn die Abbildungsoptik ein Strahlteleskop aufweist, um den Abbildungsquerschnitt auf die verfügbare Detektorfläche anzupassen. Es versteht sich, dass auch zwei oder mehr Kameras in der Bilderfassungseinrichtung vorgesehen werden können, um an einer jeweiligen Detektorfläche eines oder mehrere Bilder zu erfassen. Insbesondere die Bestimmung der Position der Referenzkontur kann anstelle einer Flächen-Kamera auch mit einem einfacheren optischen Sensor bzw. Detektor, beispielsweise einer Vierquadrantendiode oder einer Zeilenkamera, erfolgen.

In einer weiteren Ausführungsform ist die Auswerteeinrichtung ausgebildet, durch vergleichende Auswertung der aufgenommenen Bilder einen Abstand zwischen der Referenzkontur und der Oberseite des Werkstücks zu bestimmen. Der Abstand zwischen der Referenzkontur und dem Werkstück kann bestimmt werden, indem die Differenz zwischen dem Abstand einer Oberflächenstruktur an der Oberseite des Werkstücks, d.h. einer Bildposition der Werkstückoberfläche, zu einer (identischen) Position an der Referenzkontur in den beiden aufgenommenen Bildern bestimmt wird.

Bei einer Ausführungsform umfasst die Vorrichtung zusätzlich eine Einrichtung zur Veränderung der Fokusposition des Hochenergiestrahls in Strahlrichtung sowie eine Steuer- und/oder Regeleinrichtung zur Steuerung und/oder Regelung der Fokusposition des Hochenergiestrahls an eine Soll-Fokusposition relativ zum Werkstück. Bei der Einrichtung zur Veränderung der Fokusposition kann es sich beispielsweise um einen so genannten adaptiven Spiegel handeln, dessen Oberflächenkrümmung gezielt beeinflusst werden kann, um die Fokusposition in Strahlrichtung des Hochenergiestrahls zu verändern. Anhand der auf die oben beschriebene Weise bestimmten Ist-Fokusposition kann die Einrichtung derart angesteuert werden, dass die Fokusposition auf eine Soll-Fokusposition geregelt wird, die typischer Weise während des Bearbeitungsprozesses konstant bleibt und die sich beispielsweise an der Werkstückoberseite oder in einem vorgegebenen Abstand zum Werkstück befinden kann. Auf diese Weise können die oben dargestellten durch eine thermische Belastung des Fokussierelements hervorgerufenen Veränderungen der Brennweite des Fokussierelements ausgeglichen werden. Befindet sich die Einrichtung zur Veränderung der Fokusposition, d.h. das Stellelement, vor der Messposition bzw. vor dem Beobachtungsstrahlengang, erfolgt eine Steuerung der Fokusposition an die Soll-Fokusposition. Aus der Ermittlung der Fokusposition auf dem Werkstück und des Fokusabstandes der Referenzkontur im Bearbeitungskopf (z.B. Laserschneiddüse) kann weiterhin der Abstand dieser Referenzkontur zur Werkstückoberfläche ermittelt werden (s.o.) und ggfls. mittels der Steuer- und/oder Regeleinrichtung gesteuert bzw. geregelt werden.

Bei einer weiteren Ausführungsform umfasst die Vorrichtung zusätzlich eine Einrichtung zur Veränderung der Fokusposition der Abbildungsoptik in Strahlrichtung des Hochenergiestrahls, sowie eine Steuer- und/oder Regeleinrichtung zur Steuerung und/oder Regelung der Fokusposition der Abbildungsoptik an eine Soll-Fokusposition. Die Einrichtung zur Veränderung der Fokusposition bzw. das Stellelement ist in diesem Fall typischer Weise im Beobachtungsstrahlengang angeordnet, so dass eine Regelung der Fokusposition der Abbildungsoptik an die Soll-Fokusposition erfolgt. Die Soll-Fokusposition der Abbildungsoptik liegt typischer Weise an der zu beobachtenden Oberfläche des Werkstücks. Die Steuerung bzw. Regelung an die Soll-Fokusposition kann entsprechend der weiter oben im Zusammenhang mit dem Hochenergiestrahl beschriebenen Vorgehensweise durchgeführt werden.

Die Erfindung betrifft auch ein Verfahren der eingangs genannten Art, welches folgende zusätzlichen Schritte aufweist: Erzeugen mindestens eines Bildes des zu überwachenden Bereichs und/oder der Referenzkontur durch Bilden mindestens eines Beobachtungsstrahls, der einer Beobachtungsrichtung nicht koaxial zum Hochenergiestrahl zugeordnet ist, sowie Bestimmen der Fokusposition in Strahlrichtung des Hochenergiestrahls durch Auswerten des mindestens einen aufgenommenen Bildes.

Bei einer Variante wird die Fokusposition in Strahlrichtung des Hochenergiestrahls anhand einer Position der Referenzkontur in dem mindestens einen aufgenommenen Bild bestimmt. Wie weiter oben dargestellt wurde, kann die Fokusposition in diesem Fall anhand einer lateralen Verschiebung der Referenzkontur innerhalb des aufgenommenen Bildes beispielsweise durch Vergleich mit einer Referenzposition bestimmt werden.

Bei einer weiteren Variante wird mindestens ein weiterer einer weiteren Beobachtungsrichtung zugeordneter Beobachtungsstrahl gebildet, um mindestens zwei Bilder des zu überwachenden Bereichs und/oder der Referenzkontur aus mindestens zwei unterschiedlichen Beobachtungsrichtungen zu erzeugen, wobei die Fokusposition des Hochenergiestrahls durch vergleichendes Auswerten der aufgenommenen Bilder bestimmt wird. Wie weiter oben dargestellt wurde, kann beim vergleichenden Auswerten ein lateraler Versatz zwischen den beiden aufgenommenen Bildern bzw. den auf diesen zu erkennenden Strukturen bestimmt werden, welcher ein Maß für die Lage der Fokusposition relativ zur Referenzkontur bzw. relativ zum Werkstück darstellt.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:

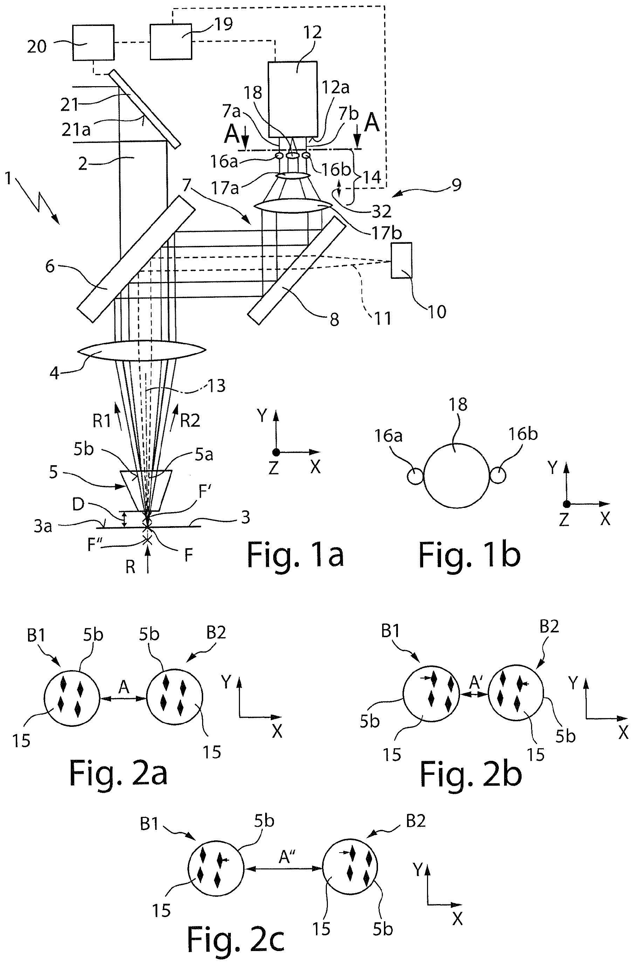

- Fig. 1a: eine schematische Darstellung eines Ausführungsbeispiels einer Vorrichtung zur Bestimmung einer Fokusposition eines Laserstrahls anhand von zwei durch ein Fokussierelement hindurch aufgenommenen Bildern,
- Fig. 1: b eine Draufsicht auf eine Abbildungsoptik der Vorrichtung von Fig. 1a,
- Fig. 2a-c: Darstellungen von zwei aus unterschiedlichen Beobachtungsrichtungen aufgenommen Bildern eines zu überwachenden Bereichs eines Werkstücks bei unterschiedlichen Fokuspositionen des Laserstrahls,
- Fig. 3: eine Darstellung eines auf eine Fokussierlinse der Vorrichtung einfallenden radialen Strahlprofils und einer daraus resultierenden radialen Brechungsindexverteilung der Fokussierlinse,
- Fig. 4a-c: Darstellungen einer Abbildungsoptik für die Vorrichtung von Fig. 1a,b mit mehreren Zylinderlinsen,
- Fig. 5a-c: Darstellungen einer Abbildungsoptik für die Vorrichtung von Fig. 1a,b mit einem Zylinderlinsenarray,
- Fig. 6a,b: Darstellungen einer Abbildungsoptik für die Vorrichtung von Fig. 1a,b mit einem näherungsweise konvex gekrümmten Umlenkprisma,
- Fig. 7a,b: Darstellungen einer Abbildungsoptik für die Vorrichtung von Fig. 1a,b mit einem näherungsweise konkav gekrümmten Umlenkprisma,
- Fig. 8a: eine Darstellung einer Abbildungsoptik für die Vorrichtung von Fig. 1a,b mit einer Umlenkeinrichtung mit zwei Spiegelflächen,
- Fig. 8b: eine Darstellung einer Abbildungsoptik für die Vorrichtung von Fig. 1a,b mit einer Strahlversatzeinrichtung, und
- Fig. 9a,b: Darstellungen einer Abbildungsoptik für die Vorrichtung von Fig. 1a,b mit einer drehbaren Blende in einer Seitenansicht und in einer Draufsicht,
- Fig. 10: eine schematische Darstellung eines Ausführungsbeispiels einer Vorrichtung zur Bestimmung einer Fokusposition eines Laserstrahls anhand eines durch ein Fokussierelement hindurch aufgenommenen Bildes, und
- Fig. 11a,b: Darstellungen von zwei aus derselben Beobachtungsrichtung aufgenommen Bildern einer Referenzkontur bei unterschiedlichen Fokuspositionen des Laserstrahls.

In der folgenden Beschreibung der Zeichnungen werden für gleiche bzw. funktionsgleiche Bauteile identische Bezugszeichen verwendet.

**Fig. 1a** zeigt einen beispielhaften Aufbau einer Vorrichtung 1 zur Fokussierung eines Laserstrahls 2 auf ein Werkstück 3, welche in Form eines Laserbearbeitungskopfs ausgebildet ist, der Teil einer nicht näher dargestellten Laserbearbeitungsmaschine ist. Der Laserstrahl 2 wird im gezeigten Beispiel von einem CO₂-Laser erzeugt. Alternativ kann der Laserstrahl 2 beispielsweise durch einen Festkörperlaser erzeugt werden. Der Laserstrahl 2 wird für die Durchführung einer Werkstückbearbeitung an dem Werkstück 3, beispielsweise in Form eines Laserschweiß- oder Laserschneidprozesses, mittels eines Fokussierelements in Form einer Fokussierlinse 4 auf das Werkstück 3 fokussiert. Bei der Fokussierlinse 4 handelt es sich im gezeigten Beispiel um eine Linse aus Zinkselenid, die den Laserstrahl 2 durch eine Laserbearbeitungsdüse 5, genauer gesagt durch deren Düsenöffnung 5a, auf das Werkstück 3 fokussiert, und zwar im gezeigten Beispiel auf eine Fokusposition F an der Oberseite 3a des Werkstücks 3. Im Falle eines Laserstrahls 2 aus einem Festkörperlaser kann eine Fokussierlinse bspw. aus Quarzglas eingesetzt werden.

In Fig. 1a ebenfalls zu erkennen ist ein teildurchlässig ausgebildeter Umlenkspiegel 6, welcher den einfallenden Laserstrahl 2 (mit einer Wellenlänge von ca. 10 µm) transmittiert und für eine Prozessüberwachung relevante Beobachtungsstrahlung (beispielsweise im sichtbaren Wellenlängenbereich) auf einen weiteren teildurchlässigen Umlenkspiegel 8 reflektiert. Im Falle eines Laserstrahls 2 aus einem Festkörperlaser ist der Umlenkspiegel typischer Weise für eine Wellenlänge von ca. 1 µm teildurchlässig ausgebildet. Der weitere teildurchlässige Umlenkspiegel 8 reflektiert die Beobachtungsstrahlung zu einer Bilderfassungseinrichtung 9. Eine Beleuchtungsquelle 10 dient zur koaxialen Beleuchtung des Werkstücks 3 mit Beleuchtungsstrahlung 11. Die Beleuchtungsstrahlung 11 wird von dem weiteren teiltransmissiven Umlenkspiegel 8 transmittiert und durch die Düsenöffnung 5a der Laserbearbeitungsdüse 5 hindurch auf das Werkstück 3 gelenkt. Alternativ zu den teildurchlässigen Umlenkspiegeln 6, 8 können auch Scraperspiegel oder Lochspiegel, welche einfallende Strahlung nur aus einem Randbereich reflektieren, eingesetzt werden, um die Beobachtungsstrahlung 7 der Bilderfassungseinrichtung 9 zuzuführen bzw. um die Beleuchtungsstrahlung 11 dem Werkstück 3 zuzuführen. Auch zwei seitlich in den Strahlengang des Laserstrahls 2 eingebrachte Spiegel können verwendet werden, um die Beobachtung zu ermöglichen.

Als Beleuchtungsquelle 10 können Diodenlaser oder LED's vorgesehen werden, die wie in Fig. 1a gezeigt koaxial, aber auch off-axis zur Laserstrahlachse 13 angeordnet werden können. Die Beleuchtungsquelle 10 kann beispielsweise auch außerhalb (insbesondere neben) der Vorrichtung 1 angeordnet und auf das Werkstück 3 gerichtet sein; alternativ kann die Beleuchtungsquelle 10 innerhalb der Vorrichtung 1 angeordnet sein, jedoch nicht koaxial zum Laserstrahl 2 auf das Werkstück 3 ausgerichtet sein. Gegebenenfalls kann die Vorrichtung 1 auch ohne eine Beleuchtungsquelle 10 betrieben werden.

Teil der Bilderfassungseinrichtung 9 ist eine im Beobachtungsstrahlengang 7 hinter dem weiteren teildurchlässigen Umlenkspiegel 8 angeordnete geometrisch hochauflösende Kamera 12. Bei der Kamera 12 kann es sich um eine Hochgeschwindigkeitskamera handeln, die koaxial zur Laserstrahlachse 13 bzw. zur Verlängerung der Laserstrahlachse 13 und somit richtungsunabhängig angeordnet ist. Beim dargestellten Beispiel erfolgt die Aufnahme von Bildern durch die Kamera 12 im Auflichtverfahren im VIS-Wellenlängenbereich, es ist aber auch möglich, dass die Kamera 12 Bilder im NIR/IR-Wellenlängenbereich aufnimmt, um das Prozesseigenleuchten bzw. ein Wärmebild des Bearbeitungsprozesses aufzunehmen. Auch eine Aufnahme von Bildern im UV-Bereich ist möglich, um eine Auflichtbeleuchtung oder eine Prozess- (Plasma-)strahlung aufzunehmen. Bei dem in Fig. 1a gezeigten Beispiel kann ein Filter vor der Kamera 12 angeordnet werden, wenn weitere Strahlungs- bzw. Wellenlängenanteile von der Erfassung mit der Kamera 12 ausgeschlossen werden sollen. Der Filter kann z.B. als schmalbandiger Bandpassfilter ausgebildet sein.

Zur Erzeugung von Bildern B1, B2 eines in **Fig. 2a****-c** gezeigten zu überwachenden Bereichs 15 an der Oberfläche 3a des Werkstück 3 auf eine Detektorfläche 12a der Kamera 12 weist die Bilderfassungseinrichtung 9 eine Abbildungsoptik 14 auf, welche im gezeigten Beispiel zwei im Strahlweg des Beobachtungsstrahlengangs 7 angeordnete Linsenelemente 16a, 16b aufweist. Die Linsenelemente 16a, 16b sind in einer gemeinsamen Ebene angeordnet und bilden jeweils nur einen Teilstrahl bzw. ein Teilbündel des Beobachtungsstrahlengangs 7, die jeweils einen Beobachtungsstrahl 7a, 7b bilden, auf unterschiedliche Bereiche der Detektorfläche 12a der Kamera 12 ab, so dass dort zwei voneinander beabstandete Bilder B1, B2 erzeugt werden, wie in Fig. 2a-c dargestellt ist. Wie in Fig. 2a-c zu erkennen ist, wird der jeweils von den Linsenelementen 16a, 16b abgebildete Bereich bzw. das Bild B1, B2 des Werkstücks 3 von einer kreisförmigen Innenkontur 5b der Laserbearbeitungsdüse 5 begrenzt. Um den Abbildungsquerschnitt an die Größe der Detektorfläche 12a anzupassen, weist die Abbildungsoptik 14 ein Strahlteleskop mit zwei weiteren Linsen 17a, 17b auf.

Der jeweilige von den beiden Linsen 16a, 16b auf die Detektorfläche 12a abgebildete Teil (Beobachtungsstrahl 7a, 7b) des Beobachtungsstrahlengangs 7 stammt von zwei sich einander in X-Richtung eines XYZ-Koordinatensystems diametral gegenüber liegenden Randbereichen der Fokussierlinse 4 und bilden somit den zu überwachenden Bereich 15 des Werkstücks 3 sowie die Innenkontur 5b der Laserbearbeitungsdüse 5 aus unterschiedlichen Beobachtungsrichtungen R1, R2 bzw. aus unterschiedlichen Beobachtungswinkeln relativ zur Laserstrahlachse 13 ab. Die beiden Linsen 16a, 16b ermöglichen somit eine stereoskopische Beobachtung des zu überwachenden Bereichs 15 bzw. der Innenkontur 5b der Laserbearbeitungsdüse 5.

In Fig. 1a weist die Abbildungsoptik 14 eine zusätzliche Linse 18 auf, welche zur Abbildung von Beobachtungsstrahlung aus einem zentralen, die Laserstrahlachse 13 schneidenden Bereich der Fokussierlinse 4 auf die Detektorfläche 12a der Kamera 12 dient. Wie in **Fig. 1b** zu erkennen ist, weist die zusätzliche Linse 18 einen deutlich größeren Durchmesser als die beiden für die stereoskopische Beobachtung verwendeten äußeren Linsen 16a, 16b auf. Die zusätzliche Linse 18 dient der Prozessbeobachtung, genauer gesagt der Beobachtung eines in dem zu überwachenden Bereich 15 enthaltenen Wechselwirkungsbereichs zwischen dem Laserstrahl 2 und dem Werkstück 3. Durch den vergleichsweise großen Durchmesser der zusätzlichen Linse 18 wird ein vergleichsweise großes und damit eine hohe Anzahl von Pixeln aufweisendes Bild auf der Detektorfläche 12a erzeugt, wodurch die Auflösung bei der Prozessbeobachtung verbessert ist. Es versteht sich, dass anders als in Fig. 1a gezeigt auch auf die zusätzliche Linse 18 und damit auf die Prozessbeobachtung verzichtet werden kann. In diesem Fall wird der Abstand in X-Richtung zwischen den beiden Linsen 16a, 16b typischer Weise gegenüber der Darstellung in Fig. 1a,b verkürzt.

Nachfolgend wird anhand von Fig. 2a-c dargestellt, wie in einer Auswerteeinrichtung 19 der Vorrichtung 1 die Fokusposition F, F', F" des Laserstrahls 2 relativ zum Werkstück 3 durch eine vergleichende Auswertung der beiden aufgenommenen Bilder B1, B2 bestimmt werden kann.

Bei der in Fig. 2a gezeigten Darstellung der beiden von den Linsen 16a, 16b erzeugten Bilder B1, B2 befindet sich die Fokusposition F des Laserstrahls 2 an der Oberseite 3a des Werkstücks 3, die im vorliegenden Beispiel einer Soll-Fokusposition der Werkstückbearbeitung entspricht. Die beiden Bilder B1, B2 erfassen jeweils einen dem zu überwachenden Bereich 15 entsprechenden Ausschnitt der Oberfläche 3a des plattenförmigen Werkstücks 3, die eine Rauigkeit und somit eine Oberflächenstruktur aufweist, die beispielhaft in Fig. 2a angedeutet ist. Wie anhand von Fig. 2a zu erkennen ist, sind die beiden durch die einen Bilderfassungsbereich bildende Düsenöffnung 5a aufgenommenen Bilder B1, B2 der Oberfläche 3a bzw. der Strukturen an der Oberfläche des Werkstücks 3 in dem zu überwachenden, von der eine Referenzkontur bildenden Innenkontur 5b der Laserbearbeitungsdüse 5 begrenzten Bereich 15 identisch und weisen insbesondere keinen lateralen Versatz in X-Richtung auf. Die beiden Bilder B1, B2 sind auf der Detektorfläche 12a um einen Abstand A in X-Richtung versetzt, der mit dem Abstand zwischen den beiden Linsen 16a, 16b korreliert ist bzw. diesem im Wesentlichen entspricht.

Bei der in Fig. 2b gezeigten Darstellung der beiden Bilder B1, B2 befindet sich die Fokusposition F' des Laserstrahls 2 oberhalb der Oberseite 3a des Werkstücks 3. Wie in Fig. 2b zu erkennen ist, ist der in den Bildern B1, B2 abgebildete zu überwachende Bereich 15 des Werkstücks 3 nicht identisch, vielmehr sind die in den Bildern B1, B2 zu erkennenden Oberflächenstrukturen zueinander lateral versetzt, und zwar beim ersten Bild B1 nach rechts, d.h. in positiver X-Richtung, während die abgebildeten Oberflächenstrukturen im zweiten Bild B2 nach links, d.h. in negativer X-Richtung verschoben sind, wie jeweils durch einen Pfeil angedeutet ist. Der Betrag des lateralen Versatzes zwischen den abgebildeten Oberflächenstrukturen des Werkstücks 3 in den beiden Bildern B1, B2 hängt vom Abstand der Fokusposition F' vom Werkstück 3 ab, wobei der laterale Versatz mit zunehmendem Abstand zwischen der Fokusposition F' und dem Werkstück 3 zunimmt, so dass dieser Versatz ein Maß für die Abweichung der Fokusposition F' von der Soll-Fokusposition F an der Oberseite 3a des Werkstücks 3 darstellt. Wie in Fig. 2b ebenfalls zu erkennen ist, nimmt bei der gezeigten Fokusposition F' oberhalb des Werkstücks 3 auch der Abstand A' zwischen den beiden von der Innenkontur 5b der Laserbearbeitungsdüse 5 begrenzten Bildern B1, B2 auf der Detektorfläche 12a ab. Ob der Abstand A bzw. A' zwischen den beiden Bildern B1, B2 bei einer Verschiebung der Fokusposition F' in Richtung auf den Laserbearbeitungskopf 1 zunimmt oder abnimmt, hängt von dem für die Erzeugung der Bilder B1, B2 verwendeten Abbildungsprinzip ab.

Bei der in Fig. 2c gezeigten Darstellung der beiden Bilder B1, B2 befindet sich die Fokusposition F" des Laserstrahls 2 unterhalb des Werkstücks 3. Wie in Fig. 2c zu erkennen ist, sind die in den Bildern B1, B2 zu erkennenden Oberflächenstrukturen des Werkstücks 3 lateral zueinander versetzt, und zwar beim ersten Bild B1 nach links, d.h. in negativer X-Richtung, während die abgebildeten Oberflächenstrukturen im zweiten Bild B2 nach rechts, d.h. in positiver X-Richtung verschoben sind, wie jeweils durch einen Pfeil angedeutet ist. Der Betrag des lateralen Versatzes zwischen den abgebildeten Oberflächenstrukturen des Werkstücks 3 in den beiden durch die Innenkontur 5b begrenzten Bildern B1, B2 ist ein Maß für die Abweichung der Fokusposition F" von der Soll-Fokusposition F an der Oberseite 3a des Werkstücks 3. Wie in Fig. 2c ebenfalls zu erkennen ist, nimmt auch der Abstand A" zwischen den beiden von der Innenkontur 5b der Laserbearbeitungsdüse 5 begrenzten Bildern B1, B2 auf der Detektorfläche 12a zu.

Wie anhand eines Vergleichs von Fig. 2b mit Fig. 2c zu erkennen ist, hängt die Richtung des lateralen Versatzes der beiden Bilder B1, B2 davon ab, ob sich die Fokusposition oberhalb oder unterhalb des Werkstücks 3 befindet, so dass anhand einer vergleichenden Auswertung der beiden Bilder B1, B2, bei welcher der laterale Versatz z.B. mit Hilfe eines Blockmatching-Algorithmus oder durch eine Frequenzanalyse bestimmt wird, die Fokuslage relativ zum Werkstück 3 nicht nur im Betrag, sondern auch in der Richtung bestimmt werden kann. Entsprechendes gilt für den Abstand A, bzw. A', A" zwischen den beiden Bildern B1, B2 auf der Detektorfläche 12a, der ebenfalls ein Maß für die Fokusposition F bzw. F', F", hier jedoch relativ zur von der Düseninnenkontur 5b gebildeten Referenzkontur, darstellt.

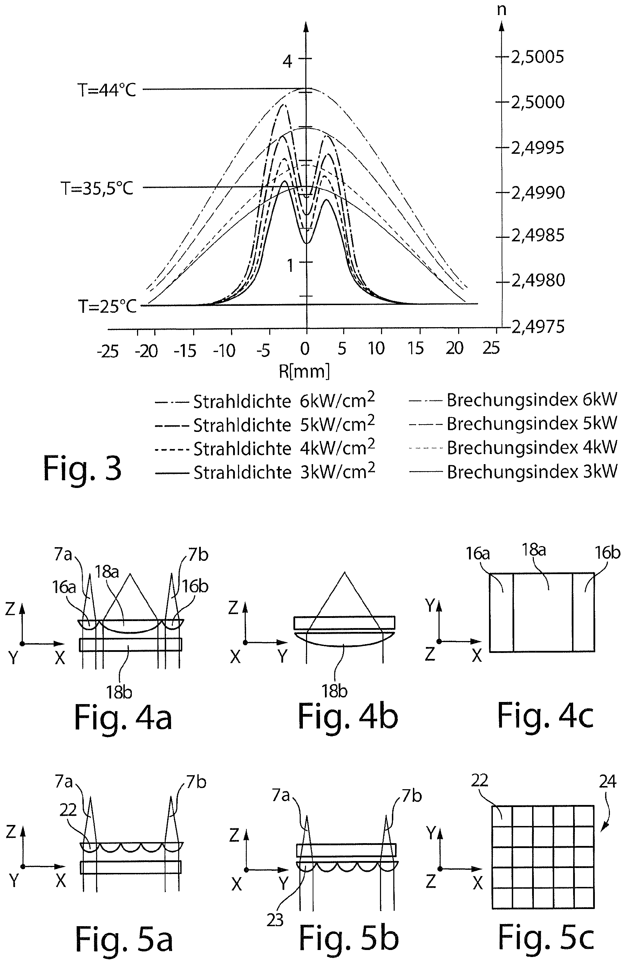

Abweichungen der Fokusposition von der Soll-Fokusposition F an der Oberseite 3a des Werkstücks 3 treten typischer Weise während der Werkstückbearbeitung ungewollt auf, da der Brechungsindex der Fokussierlinse 4 temperaturabhängig ist, wie anhand von **Fig. 3** zu erkennen ist, in welcher der Brechungsindex n der Fokussierlinse 5 für unterschiedliche Strahlungsleistungen des einfallenden Laserstrahls 2 dargestellt ist. In Fig. 3 ist auch die Strahldichte (in kW/cm²) gezeigt, die in Abhängigkeit vom Ort bzw. der Radiuskoordinate auf die Fokussierlinse 4 auftrifft und die mit zunehmender Strahlungsleistung (in kW) zunimmt. Da die thermische Belastung bzw. die Temperatur der Fokussierlinse 4 während des Bearbeitungsprozesses sich nicht bzw. nicht genau genug vorhersagen lässt, um die Fokusposition an die Soll-Fokusposition F anzupassen, ist die oben beschriebene Bestimmung der Fokuslage vorteilhaft, um die Soll-Fokusposition F während des Bearbeitungsprozesses auf einen gewünschten, typischer Weise konstanten Wert zu regeln.

Für die Regelung der Fokusposition F bzw. F', F" an die Soll-Fokusposition weist der Laserbearbeitungskopf eine Steuer- bzw. Regeleinrichtung 20 auf, mit welcher die Auswerteeinrichtung 19 in signaltechnischer Verbindung steht. Die Steuer-/Regeleinrichtung 20 dient der Steuerung bzw. Regelung des gesamten Laserbearbeitungsprozesses und wirkt im vorliegenden Fall auf einen weiteren im Strahlengang des Laserstrahls 2 angeordneten adaptiven Umlenkspiegel 21, genauer gesagt auf dessen optische Oberfläche 21a ein, deren Krümmung auf an sich bekannte Weise eingestellt werden kann. Die Krümmung des adaptiven Umlenkspiegels 21 beeinflusst die Fokusposition F bzw. F', F" in Strahlausbreitungsrichtung 13 des Laserstrahls 2. Die Krümmung kann mit Hilfe der Steuer-/Regeleinrichtung 20 so eingestellt werden, dass die thermisch bedingte Abweichung der Fokusposition von der Soll-Fokusposition F', F" gerade kompensiert wird. Im hier beschriebenen Beispiel bedeutet dies, dass auf den adaptiven Umlenkspiegel 21 so lange eingewirkt wird, bis die in Fig. 2a gezeigte Situation eintritt, d.h. bis die in den beiden Bildern B1, B2 identifizierten Strukturen keinen lateralen Abstand mehr zueinander aufweisen.

Es versteht sich, dass die Soll-Fokuslage F nicht zwingend an der Oberseite 3a des Werkstücks 3 liegen muss, sondern dass diese auch zur Oberseite 3a des Werkstück 3 beabstandet angeordnet sein kann. Auch in diesem Fall kann die Steuer-/Regelungseinrichtung 20 zur Regelung auf einen vorgegebenen lateralen Abstand zwischen den in den beiden Bildern B1, B2 zu erkennenden Strukturen dienen, welcher der gewünschten Soll-Fokusposition entspricht. Zusätzlich oder alternativ kann die Regelung der Fokusposition F bzw. F', F" auch anhand des Abstandes A bzw. A', A" zwischen den beiden Bildern B1, B2 erfolgen, indem dieser Abstand A bzw. A', A" auf einen gewünschten Abstand A geregelt wird, welcher einer Soll-Fokusposition bzw. einer Soll-Brennweite der Fokussierlinse 4 relativ zum Laserbearbeitungskopf 1 entspricht. Insbesondere kann mit Hilfe des Abstandes A bzw. A', A" eine Grobjustage der Fokusposition F bzw. F', F" erfolgen. Auch kann anhand eines Vergleichs zwischen dem Abstand A bzw. A', A" und dem lateralen Versatz zwischen den in den beiden Bildern B1, B2 zu erkennenden Oberflächenstrukturen der Abstand D zwischen der Laserbearbeitungsdüse 5 und dem Werkstück 3 bzw. der Oberseite 3a des Werkstücks 3 bestimmt werden. Konkret wird zur Bestimmung des Abstandes D die Differenz zwischen den Abständen der gleichen Oberflächenstruktur in den beiden Bildern B1, B2 zu dem durch die Referenzkontur 5b gebildeten Rand des jeweiligen Bildes B1, B2 (in X-Richtung) bestimmt. Dieser Differenz wird anhand eines bekannten, z.B. durch Testmessungen ermittelten oder berechneten funktionalen Zusammenhangs der Abstand D zum Werkstück 3 zugeordnet. Es versteht sich, dass an Stelle der oben beschriebenen Bestimmung des lateralen Versatzes zwischen den in den Bildern B1, B2 zu erkennenden Oberflächenstrukturen auch andere Merkmale des Werkstücks 3 herangezogen werden können, um den lateralen Versatz zu bestimmen, beispielsweise können ggf. auch (Wärme-)Bilder des Prozesseigenleuchtens oder dergleichen von der Auswerteeinrichtung 19 für die Bildauswertung herangezogen werden.

Die Steuer-/Regelungseinrichtung 20 kann auch zur Regelung der Fokuslage der Abbildungsoptik 14 dienen. Zu diesem Zweck wirkt die Steuer-/Regeleinrichtung 20 auf eine Einrichtung 32 zur Verschiebung der Linsen 17a, 17b in Strahlrichtung 13 des Laserstrahls 2, genauer gesagt zur Veränderung des relativen Abstandes zwischen den Linsen 17a, 17b ein. Die Fokusposition der Abbildungsoptik 14 wird zur Vereinfachung mit denselben Bezugszeichen F, F', F" wie die Fokusposition des Laserstrahls 2 bezeichnet. Durch die Regelung der Fokusposition F', F', F" der Abbildungsoptik 19 kann sichergestellt werden, dass die Oberfläche 3a des Werkstücks 3 in deren Tiefenschärfebereich angeordnet ist, so dass die Oberfläche 3a des Werkstücks 3 scharf auf die Detektorfläche 12a abgebildet wird. Für die Regelung der Fokusposition F, F', F" an die Soll-Fokusposition auf dem Werkstück 3 wird der Abstand A bzw. A', A" zwischen den beiden Bildern B1, B2 auf einen durch Testmessungen bestimmten oder berechneten Soll-Abstand geregelt.

Wie anhand von **Fig. 4a****-c** zu erkennen ist, können in der Abbildungsoptik 14 an Stelle von sphärischen Linsen, welche jeweils einer Beobachtungsrichtung R1, R2 zugeordnet sind, auch Zylinderlinsen 16a, 16b eingesetzt werden, die nur in X-Richtung, nicht aber in Y-Richtung eine abbildende Wirkung aufweisen. In diesem Fall ist die zusätzliche, zentrische Linse ebenfalls als Zylinderlinse 18a ausgebildet, die ebenfalls nur in X-Richtung eine optische Wirkung erzeugt. Eine weitere, in Y-Richtung ausgerichtete Zylinderlinse 18b dient zur Erzeugung einer Abbildung auch in Y-Richtung. Durch die gekreuzten Zylinderlinsen 16a,b, 18a bzw. 18b kann der verfügbare Abbildungsquerschnitt auf der Detektorfläche 12a gut ausgenutzt werden.

Die in **Fig. 5a****-c** gezeigte Abbildungsoptik 14 weist ebenfalls eine Mehrzahl von gekreuzten ersten und zweiten Zylinderlinsen 22, 23 auf, die in einer Rasteranordnung 24 angeordnet sind, um eine Anzahl von 5 x 5 = 25 Bildern auf der Detektorfläche 12a zu erzeugen. Die Rasteranordnung 24 von Linsenelementen 22, 23 kann genutzt werden, um eine ortsaufgelöste Bestimmung von Wellenfrontaberrationen zu ermöglichen, welche durch die thermisch belastete Fokussierlinse 4 hervorgerufen werden. Anhand der Wellenfrontaberrationen kann die Strahlfokussierung mit Hilfe der Fokussierlinse 4 durch eine geeignete der Fokussierlinse 4 vorgeschaltete Strahlformung mit Hilfe von an sich bekannten, hier nicht näher beschriebenen strahlformenden optischen Elementen optimiert werden. Alternativ oder zusätzlich kann eine koaxiale Beobachtung des Werkstücks 3 für die Prozessüberwachung durch eine geeignete Korrektur verbessert werden. Beispielsweise kann der Beobachtungsstrahlengang 7 durch die Anpassung von Aperturen und/oder Abständen zwischen abbildenden optischen Elementen und/oder durch frei justierbare Spiegel angepasst werden.

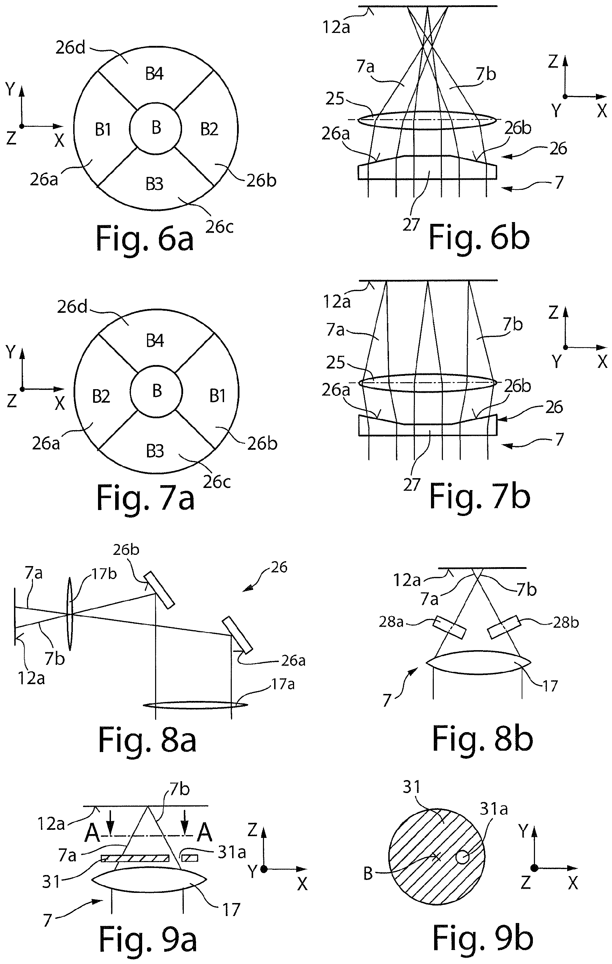

Eine alternative Ausgestaltung der Abbildungsoptik 14 mit einer Abbildungslinse 25 und einer Strahl-Umlenkeinrichtung in Form eines Umlenkprismas 26 ist in **Fig. 6a****,b** dargestellt. Das Umlenkprisma 26 weist vier keilförmige Abschnitte mit planen, zur Beobachtungstrahlung bzw. zu deren Strahlachse unter einem Winkel angeordneten Flächen 26a-d auf, die um einen zentralen, planen Bereich 27 herum angeordnet sind. Die ersten beiden Flächen 26a,b dienen als Strahlumlenkbereiche zur Umlenkung der einfallenden Beobachtungsstrahlung in X-Richtung, so dass diese nicht senkrecht zur Mittelebene der Abbildungslinse 25 auf diese auftrifft und ein erstes und zweites Bild B1, B2 auf der Detektorfläche 12a erzeugt, die entlang der X-Achse voneinander beabstandet sind.

Die dritte Fläche 26c und die vierte Fläche 26d dienen entsprechend als Strahlumlenkbereiche zur Erzeugung eines dritten und vierten Bildes B3, B4 auf der Detektorfläche 12a, die entlang der Y-Richtung voneinander beabstandet sind. Der zentrale, die Beobachtungsstrahlung nicht umlenkende Bereich 27 dient der Erzeugung eines zentrisch im Strahlengang der Beobachtungsstrahlung angeordneten Bildes B auf der Detektorfläche 12a, welches wie weiter oben dargestellt zur Prozessbeobachtung verwendet werden kann. Durch die Erzeugung von vier Bildern B1, B2 bzw. B3, B4, die jeweils paarweise miteinander verglichen werden, können weitere Informationen über die Fokussierlinse 4 erhalten werden, insbesondere kann ein Hinweis auf Wellenfrontaberrationen bzw. auf unterschiedliche thermische Belastungen in den beiden Richtungen (X bzw. Y) erhalten werden. Auch kann ggf. eine vergleichende Auswertung von dreien oder von allen vier Bildern B1, B2 bzw. B3, B4 in der Auswerteeinrichtung 19 erfolgen, um die Signifikanz der Korrelation und damit die Präzision bei der Bestimmung der Fokusposition F, F', F" zu erhöhen.

Bei der in Fig. 6a,b gezeigten Ausführungsform ergibt sich insgesamt eine annäherungsweise konvexe Geometrie des Umlenkprismas. Das in **Fig. 7a****,b** dargestellte Umlenkprisma 26 unterscheidet sich von dem in Fig. 6a,b gezeigten lediglich dadurch, dass dieses eine im Wesentlichen konkave Geometrie aufweist, wodurch sich die Zuordnung der Bilder B1, B2 zu den Teilstrahlen 7a, 7b des Beobachtungsstrahlengangs 7 umkehrt und der in Fig. 1 gezeigten Zuordnung entspricht. Die Zuordnung der Teilstrahlen bzw. der Strahlenbündel des Beobachtungsstrahlengangs 7 zu den Bildern B1, B2 bzw. B3, B4 ist bei der Identifikation der Richtung der Änderung der Fokusposition F bzw. F', F" (auf das Werkstück 3 zu bzw. von diesem weg) zu berücksichtigen.

Ein weiteres Ausführungsbeispiel einer Abbildungsoptik mit einer Strahl-Umlenkeinrichtung 26, die in Form von zwei Spiegeln mit Strahlumlenkbereichen in Form von planen Spiegelflächen 26a, 26b ausgebildet ist, ist in **Fig. 8a** dargestellt. Da die beiden Spiegelflächen 26a, 26b zueinander verkippt sind, wird die auftreffende Beobachtungsstrahlung 7 in unterschiedliche Richtungen reflektiert und trifft in Form von zwei einer jeweiligen Beobachtungsrichtung R1, R2 zugeordneten Beobachtungsstrahlen 7a, 7b an unterschiedlichen Stellen auf die Detektorfläche 12a auf, um dort ein erstes und zweites Bild B1, B2 zu erzeugen.

Eine weitere Möglichkeit zur Erzeugung von zwei (oder mehr) Bildern B1, B2 ist in **Fig. 8b** dargestellt. Dort sind im Bereich des fokussierten Beobachtungsstrahlengangs 7 hinter einer Linse 17 zwei Blöcke 28a, 28b (planparallele Platten) aus Quarzglas angeordnet, welche zwei parallele Stirnseiten aufweisen und als Strahlversatzeinrichtung dienen. Die fokussierte Beobachtungsstrahlung trifft jeweils unter einem Winkel auf die Strahleintrittsseite eines jeweiligen Blocks 28a, 28b auf und tritt unter demselben Winkel parallel versetzt an der gegenüber liegenden Strahlaustrittsseite wieder aus. Aufgrund der größeren Brechzahl im optisch dichteren Medium des Blocks 28a, 28b verläuft die Beobachtungsstrahlung im Quarzglasmaterial unter einem kleineren Winkel zur Normalenrichtung senkrecht zur Eintritts- bzw. Austrittsfläche. Der in einen jeweiligen Block 28a, 28b eintretende Teil der Beobachtungsstrahlung bildet jeweils einen einer jeweiligen Beobachtungsrichtung R1, R2 zugeordneten Beobachtungsstrahl 7a, 7b, wobei die beiden Beobachtungsstrahlen 7a, 7b aufgrund des Strahlversatzes lateral versetzt an der Detektorfläche 12a auftreffen und dort zwei lateral zueinander verschobene Bilder B1, B2 erzeugen.

Bei dem in Fig. 8b gezeigten Beispiel kreuzen sich wie bei dem in Fig. 6b gezeigten Beispiel die Beobachtungsstrahlen 7a, 7b, da die Normalenrichtungen (senkrecht zur Strahleintritts- bzw. Strahlaustrittsfläche) der gegeneinander verkippten Blöcke 28a, 28b sich im Strahlengang hinter den Blöcken 28a, 28b kreuzen. Es versteht sich, dass die Beobachtungsstrahlen 7a, 7b auch wie in Fig. 7b gezeigt verlaufen können, sofern die Blöcke 28a, 28b in entgegengesetzter Richtung zueinander verkippt werden, d.h. wenn sich deren Normalen-Richtungen im Strahlengang vor der Linse 17 schneiden.

Durch vergleichende Auswertung der beiden Bilder kann auf die oben beschriebene Weise mittels der Auswerteeinrichtung 19 die Fokusposition F, F', F" des Laserstrahls 2 bestimmt werden. Entsprechendes gilt selbstverständlich auch für die in Zusammenhang mit Fig. 6a,b und Fig. 7a,b beschriebenen Abbildungsoptiken 14 bzw. die mit diesen aufgenommenen Bilder B bzw. B1 bis B4. Es versteht sich, dass bei den weiter oben beschriebenen Beispielen im Strahlengang der Beobachtungsstrahlung 7 zusätzlich eine oder mehrere (feststehende) Blenden vorgesehen sein können, um Teile der Beobachtungsstrahlung 7 auszublenden, die nicht zur Detektorfläche 12a gelangen sollen bzw. die nicht zur Bildung der beiden Beobachtungsstrahlen 7a, 7b benötigt werden.

In einer nicht bildlich dargestellten Variante kann zur Bildung von zwei einer jeweiligen Beobachtungsrichtung R1, R2 zugeordneten Beobachtungsstrahlen 7a, 7b ein Strahlteiler verwendet werden, der den Beobachtungsstrahlengang 7 anhand von mindestens einer sich über den Strahlquerschnitt verändernden Eigenschaft in zwei (oder mehr) die Beobachtungsstrahlen 7a, 7b bildende Teile aufteilt. Der Strahlteiler kann beispielsweise zur Transmission bzw. zur Reflexion eines Strahlungsanteils des Beobachtungsstrahlengangs 7 anhand der Wellenlänge, der Polarisation oder der Leistung der Beobachtungsstrahlung ausgebildet sein. Beispielsweise kann an dem Strahlteiler ein Beobachtungsstrahl 7b mit hoher Leistung, der aus der Mitte des Beobachtungsstrahlengangs 7 stammt, transmittiert und ein aus dem Randbereich des Beobachtungsstrahlengangs 7 stammender Beobachtungsstrahl 7a, der eine geringere Leistung aufweist, reflektiert werden.

**Fig. 9a,b** zeigen eine weitere Möglichkeit zur Bildung von zwei einer jeweiligen Beobachtungsrichtung R1, R2 zugeordneten Beobachtungsstrahlen 7a, 7b, die sich von den weiter oben beschriebenen Möglichkeiten dadurch unterscheidet, dass die Beobachtungsstrahlen 7a, 7b zeitlich aufeinander folgend gebildet werden. Wie in Fig. 9a,b gezeigt ist, ist zu diesem Zweck in der Abbildungsoptik 14 eine Blende 31 vorgesehen, die um eine zentrale Drehachse B drehbar gelagert ist, so dass sich bei der Drehung die Position einer exzentrisch angeordneten Blendenöffnung 31a auf einem Kreisbogen um die Drehachse B bewegt. Ein jeweils durch die Blendenöffnung 31a hindurch tretender Teil des Beobachtungsstrahlengangs 7 bildet einen Beobachtungsstrahl 7a, 7b. Durch die Anordnung der Blende 31 im mittels einer Linse 17 fokussierten Strahlengangs der Abbildungsoptik 14 werden die Beobachtungsstrahlen 7a, 7b aus unterschiedlichen, beispielsweise einander diametral gegenüber liegenden Bereichen des Beobachtungsstrahlengangs 7 zeitlich aufeinander folgend auf dieselbe Stelle auf der Detektoroberfläche 12a abgebildet. Die von der Kamera 12 nacheinander aufgenommenen Bilder können wie weiter oben beschrieben zur Bestimmung der Fokusposition F, F', F" des Laserstrahls 2 mittels der Auswerteeinrichtung 19 vergleichend ausgewertet werden.

Es versteht sich, dass an Stelle einer mechanisch verstellbaren Blende 31 auch eine elektrisch verstellbare Blende, beispielsweise in Form eines LCD-Arrays, verwendet werden kann, bei der einzelne Pixel oder Pixelgruppen elektronisch an- bzw. ausgeschaltet werden, um die Blendenwirkung zu erzeugen. Auch kann die mechanische Blende 31 anders als in Fig. 9a,b gezeigt quer zum Beobachtungsstrahlengang 7, beispielsweise in der XY-Ebene bewegt bzw. verschoben werden, um zeitlich aufeinander folgend unterschiedliche Teile des Beobachtungsstrahlengangs 7 abzuschatten bzw. für die Beobachtung zu öffnen. Die Blende 31 kann auch in Form eines oder mehrerer auf- und zuklappbarer Elemente realisiert werden und es können auch mehrere Blenden hintereinander angeordnet werden, um die zeitlich aufeinander folgende Erzeugung der Bilder zu realisieren.

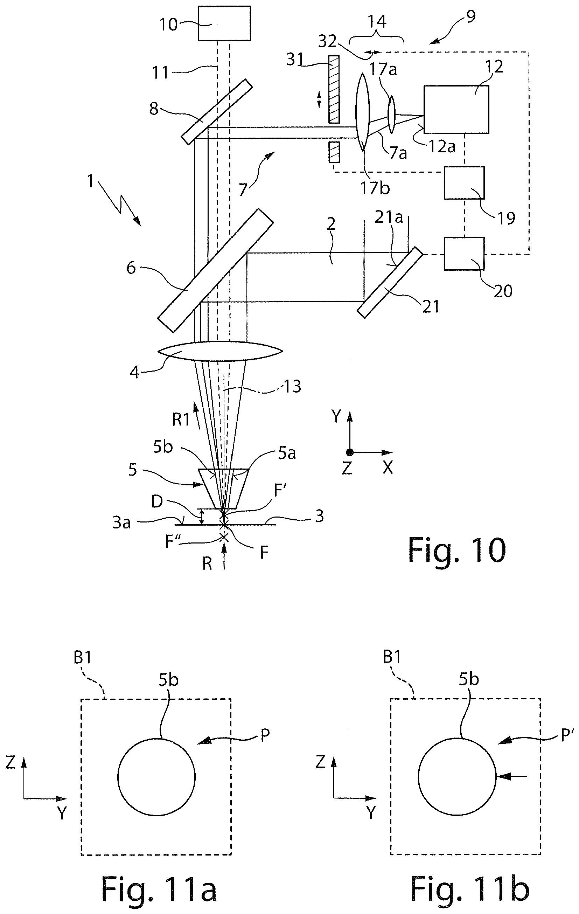

**Fig. 10** zeigt ein weiteres Ausführungsbeispiel einer Vorrichtung 1 in Form eines Laserbearbeitungskopfs zur Fokussierung eines Laserstrahls 2 auf ein Werkstück 3, welche sich von der in Fig. 1 gezeigten Vorrichtung 1 im Wesentlichen dadurch unterscheidet, dass von der Kamera 12 nur ein einziges Bild B1 des zu überwachenden Bereichs 15 bzw. der die Referenzkontur bildenden Innenkontur 5b der Laserbearbeitungsdüse 5 aufgenommen wird. Zu diesem Zweck wird von der Bilderfassungseinrichtung 9 mittels einer Blende 31 ein (einziger) Beobachtungsstrahl 7a gebildet, der mittels der Abbildungsoptik 14, die im gezeigten Beispiel zwei Linsen 17a, 17b in einer Teleskopanordnung zur Anpassung des Strahlquerschnitts des Beobachtungsstrahls 7a an die Detektorfläche 12a der Kamera 12 aufweist, um das Bild B1 an der Detektorfläche 12a sowie ggf. zusätzlich ein höher aufgelöstes Bild aus einer Beobachtungsrichtung R koaxial zum Hochenergiestrahl 2 zu erzeugen, wie dies weiter oben im Zusammenhang mit Fig. 1 beschrieben wurde.

Wie in **Fig. 11a****,b** zu erkennen ist, welche das Bild B1, genauer gesagt einen Ausschnitt der Detektorfläche 12a, bei unterschiedlichen Fokuspositionen F, F' des Laserstrahls 2 zeigen, verändert sich bei einer Änderung der Fokusposition F, F' auch die Position P, P' der die Referenzkontur bildenden Innenkontur 5b der Laserbearbeitungsdüse 5 innerhalb des Bildes B1 bzw. auf der Detektorfläche 12a.

Bei der in Fig. 11a gezeigten Darstellung befindet sich die Fokusposition F des Laserstrahls 2 an der Oberseite 3a des Werkstücks 3, was im vorliegenden Beispiel der Soll-Fokusposition entspricht. Bei der in Fig. 11b gezeigten Darstellung befindet sich die Fokusposition F' des Laserstrahls 2 oberhalb der Oberseite 3a des Werkstücks 3 und die Position P' der Innenkontur 5b ist lateral (in negativer Y-Richtung) gegenüber der in Fig. 11a gezeigten Position P versetzt. Der Betrag des lateralen Versatzes zwischen den Positionen P, P' in dem aufgenommenen Bild B1 hängt vom Abstand der Fokusposition F' vom Werkstück 3 ab. Der laterale Versatz nimmt mit zunehmendem Abstand zwischen der Fokusposition F' und dem Werkstück 3 zu, so dass dieser Versatz ein Maß für die Abweichung der Fokusposition F' von der Soll-Fokusposition F an der Oberseite 3a des Werkstücks 3 darstellt. Der laterale Versatz lässt sich z.B. mittels einer Korrelation des aufgenommenen Bildes B1 mit einem Referenzbild bestimmen, das bei der gewünschten Soll-Fokusposition F aufgenommen wurde. Alternativ kann der laterale Versatz dadurch bestimmt werden, dass in dem aufgenommenen Bild B1 und dem Referenzbild eine charakteristische Position, beispielsweise der geometrische Schwerpunkt oder ein spezifisches Geometriemerkmal, z.B. eine Objektkante, ermittelt wird. Die Positionsabweichung zwischen den charakteristischen Positionen in den beiden Bildern kann durch Vergleich bestimmt werden und entspricht dem lateralen Versatz.

Ob bei einer Verschiebung der Fokusposition F' in Richtung auf den Laserbearbeitungskopf 1 die Verschiebung der Innenkontur 5b der Laserbearbeitungsdüse 5 in dem aufgenommenen Bild B1 in positiver oder in negativer Y-Richtung erfolgt, hängt von dem für die Erzeugung des Bildes B1 verwendeten Abbildungsprinzip ab. Die Zuordnung zwischen der Richtung des lateralen Versatzes der Innenkontur 5b und der Richtung der Verschiebung der Fokusposition F ist für ein gegebenes Abbildungsprinzip eindeutig, so dass anhand der Richtung des lateralen Versatzes auf die Richtung der Verschiebung der Fokusposition F geschlossen werden kann.

Wie in Fig. 10 angedeutet ist, kann die Blende 31 verschiebbar ausgebildet sein und für die Steuerung der Verschiebung mit der Auswerteeinrichtung 19 und/oder mit der Steuer-/Regeleinrichtung 20 in signaltechnischer Verbindung stehen. Durch die Verschiebung der Blende 31 kann der Teilbereich der Fokussierlinse 4 eingestellt werden, der vom Beobachtungsstrahl 7a durchlaufen wird, wodurch die Beobachtungsrichtung R1 bzw. der Beobachtungswinkel verändert werden kann, was sich für bestimmte Anwendungen als vorteilhaft herausgestellt hat.

Auch bei der in Fig. 10 gezeigten Vorrichtung 1 kann mit Hilfe der Steuer-/Regeleinrichtung 20 auf ein weiteres im Strahlengang des Laserstrahls 2 angeordnetes optisches Element, das eine Strahlformung bzw. Fokusanpassung bewirkt, in diesem Falle einen adaptiven Umlenkspiegel 21, genauer gesagt auf dessen optische Oberfläche 21a, eingewirkt werden, um die Fokusposition F bzw. F' in Strahlausbreitungsrichtung 13 des Laserstrahls 2 an eine Soll-Fokusposition zu regeln. Auch eine Einwirkung auf andere optische Elemente, welche eine Strahlformung bzw. Fokusanpassung ermöglichen, beispielsweise eine Linse mit variabler Brennweite (z.B. eine Flüssiglinse) oder eine in der Position im Strahlengang verschiebbare Linse ist möglich. Anhand des lateralen Versatzes der Innenkontur 5b oder aus dem Betrag der für die Fokuskorrektur bzw. die Regelung der Fokuslage der Abbildungsoptik 14 erforderlichen Verschiebung der Linse 17a bzw. der Linse 17b kann auf eine Verschiebung der Fokusposition F, F', F" des Laserstrahls 2 geschlossen werden, welche steuernd im Laserstrahl 2 korrigiert werden kann.

Die Steuer-/Regelungseinrichtung 20 kann auch zur Regelung der Fokuslage der Abbildungsoptik 14 dienen, indem diese auf eine Verschiebeeinrichtung 32 zur Verschiebung der Linsen 17a, 17b in Strahlrichtung 13 des Laserstrahls 2 einwirkt, wie weiter oben im Zusammenhang mit Fig. 1 beschrieben wurde. Auf diese Weise kann sichergestellt werden, dass die Oberfläche 3a des Werkstücks 3 stets scharf auf die Detektorfläche 12a abgebildet wird.

Zusammenfassend kann auf die oben beschriebene Weise die Fokusposition F bzw. F', F" des Laserstrahls 2 während der Werkstückbearbeitung bestimmt und falls erforderlich korrigiert werden. Befindet sich die Soll-Fokusposition F an der Oberseite 3a des Werkstücks 3, ist bei einer entsprechenden Regelung der Fokusposition sichergestellt, dass das Werkstück 3 sich in der Brennebene der Fokussierlinse 4 befindet. Neben der Verbesserung der Prozessqualität kann bei entsprechender Regelung der Fokusposition der Abbildungsoptik 14 auch das zentrisch aufgenommene Bild B der Oberfläche 3a des Werkstücks 3, welches der Prozessbeobachtung dient, durch die Fokussierlinse 4 "scharf", d.h. ohne Defokussierung, abgebildet werden, wodurch die Prozessbeobachtung verbessert wird.

## Patentansprüche

1. Vorrichtung (1) zur Bestimmung einer Fokusposition (F, F',F") eines Hochenergiestrahls (2), insbesondere eines Laserstrahls, in Strahlrichtung (13) des Hochenergiestrahls (2) relativ zu einem Werkstück (3) und/oder relativ zu einer Referenzkontur (5b) der Vorrichtung (1), umfassend:
ein Fokussierelement (4) zur Fokussierung des Hochenergiestrahls (2) auf das Werkstück (3),
eine Bilderfassungseinrichtung (9) zur Erfassung eines zu überwachenden Bereichs (15) an der Oberfläche (3a) des Werkstücks (3) und/oder der Referenzkontur (5b) mittels eines durch das Fokussierelement (4) hindurch verlaufenden Beobachtungsstrahlengangs (7),
**dadurch gekennzeichnet,**
**dass** die Bilderfassungseinrichtung (9) zur Bildung mindestens eines Beobachtungsstrahls (7a) ausgebildet ist, der einer nicht koaxial zum Hochenergiestrahl (2) verlaufenden Beobachtungsrichtung (R1) zugeordnet ist und eine Abbildungsoptik (14) zur Erzeugung mindestens eines Bildes (B1) des zu überwachenden Bereichs (15) und/oder der Referenzkontur (5b) aus der mindestens einen Beobachtungsrichtung (R1) umfasst, sowie
**dass** die Vorrichtung (1) eine Auswerteeinrichtung (19) zur Bestimmung der Fokusposition (F, F', F") in Strahlrichtung (13) des Hochenergiestrahls (2) durch Auswertung des mindestens einen aufgenommenen Bildes (B1) umfasst.

2. Vorrichtung nach Anspruch 1, bei der die Auswerteeinrichtung (19) ausgebildet ist, die Fokusposition (F, F', F") in Strahlrichtung (13) des Hochenergiestrahls (2) anhand einer Position (P, P') der Referenzkontur (5b) in dem mindestens einen aufgenommenen Bild (B1) zu bestimmen.

3. Vorrichtung nach Anspruch 1, bei der die Bilderfassungseinrichtung (9) zur Bildung mindestens eines weiteren Beobachtungsstrahls (7b) ausgebildet ist, der einer weiteren Beobachtungsrichtung (R2; R) zugeordnet ist, wobei die Abbildungsoptik (14) zur Erzeugung von mindestens zwei Bildern (B1, B2; B3, B4) des zu überwachenden Bereichs (15) und/oder der Referenzkontur (5b) aus den mindestens zwei unterschiedlichen Beobachtungsrichtungen (R1, R2) ausgebildet ist, und wobei
die Auswerteeinrichtung (19) zur Bestimmung der Fokusposition (F, F', F") des Hochenergiestrahls (2) durch vergleichende Auswertung der aufgenommenen Bilder (B1, B2; B3, B4) ausgebildet ist.

4. Vorrichtung nach einem der vorhergehenden Ansprüche, welche eine Beleuchtungsquelle (10) zur Beleuchtung der Oberseite (3a) des Werkstücks (3) insbesondere in dem zu überwachenden Bereich (15) und/oder zur Beleuchtung der Referenzkontur (5b) aufweist.

5. Vorrichtung nach einem der vorhergehenden Ansprüche, bei welcher der Beobachtungsstrahlengang (7) der Bilderfassungseinrichtung (9) zur Erfassung des zu überwachenden Bereichs (15) an der Oberfläche (3a) des Werkstücks (3) einen Bilderfassungsbereich (5a) aufweist, der von der Referenzkontur(5b) begrenzt ist.

6. Vorrichtung nach einem der Ansprüche 3 bis 5, bei welcher die Auswerteeinrichtung (19) zur Bestimmung der Fokusposition (F, F', F") des Hochenergiestrahls (2) relativ zum Werkstück (3) durch vergleichende Auswertung der Bilder (B1, B2; B3, B4) der Oberfläche (3a) des Werkstücks (3) in dem zu überwachenden Bereich (15) ausgebildet ist.

7. Vorrichtung nach einem der Ansprüche 3 bis 6, bei welcher die Abbildungsoptik (14) mindestens zwei einer jeweiligen Beobachtungsrichtung (R1, R2) zugeordnete abbildende optische Elemente (22, 16a, 16b) aufweist.

8. Vorrichtung nach Anspruch 7, bei welcher die abbildenden optischen Elemente als Zylinderlinsen (22, 16a, 16b) ausgebildet sind.

9. Vorrichtung nach Anspruch 7 oder 8, bei welcher die abbildenden optischen Elemente (22) ein Linsenarray (24) bilden.

10. Vorrichtung nach einem der Ansprüche 3 bis 9, bei welcher die Abbildungsoptik (14) eine Umlenkeinrichtung (26) mit mindestens zwei einer jeweiligen Beobachtungsrichtung (R1, R2, ...) zugeordneten Strahlumlenkbereichen (26a, 26b; 26c, 26d) aufweist.

11. Vorrichtung nach Anspruch 10, bei welcher die Umlenkeinrichtung mindestens ein Umlenkprisma (26) aufweist.

12. Vorrichtung nach einem der Ansprüche 3 bis 11, bei welcher die Bilderfassungseinrichtung (9) zur Bildung der mindestens zwei einer jeweiligen Beobachtungsrichtung (R1, R2; R1, R) zugeordneten Beobachtungsstrahlen (7a, 7b) eine Strahlversatzeinrichtung (28a, 28b) aufweist.

13. Vorrichtung nach einem der Ansprüche 3 bis 12, bei welcher die Bilderfassungseinrichtung (9) zur Bildung der mindestens zwei einer jeweiligen Beobachtungsrichtung (R1, R2; R1, R) zugeordneten Beobachtungsstrahlen (7a, 7b) zu unterschiedlichen Zeitpunkten ausgebildet ist.

14. Vorrichtung nach einem der Ansprüche 3 bis 13, bei welcher die Bilderfassungseinrichtung (9) zur Bildung der mindestens zwei einer jeweiligen Beobachtungsrichtung (R1, R2; R1, R) zugeordneten Beobachtungsstrahlen (7a, 7b) mindestens eine Blende (31) aufweist.

15. Vorrichtung nach einem der Ansprüche 3 bis 14, bei welcher die Abbildungsoptik (14) zur Erzeugung von mindestens drei Bildern (B1, B2; B3, B4) des zu überwachenden Bereichs (15) und/oder der Referenzkontur (5b) aus unterschiedlichen Beobachtungsrichtungen (R1, R2, ...) ausgebildet ist.

16. Vorrichtung nach einem der vorhergehenden Ansprüche, bei der die Abbildungsoptik (14) ein abbildendes optisches Element (18) zur Erzeugung eines Bildes (B) des zu überwachenden Bereichs (15) an der Oberfläche (3a) des Werkstücks (3) aus einer Beobachtungsrichtung (R) koaxial zum Hochenergiestrahl (2) aufweist.

17. Vorrichtung nach Anspruch 16, bei der die Auswerteeinrichtung (19) zur vergleichenden Auswertung des koaxial zum Hochenergiestrahl (2) aufgenommenen Bildes (B) und mindestens eines nicht koaxial zum Hochenergiestrahl (2) aufgenommenen Bildes (B1 bis B4) ausgebildet ist.

18. Vorrichtung nach einem der vorhergehenden Ansprüche, bei welcher die Bilderfassungseinrichtung (9) zur Aufnahme des mindestens einen Bildes (B1 bis B4, B) durch eine Düsenöffnung (5a) einer Laserbearbeitungsdüse (5) zum Durchtritt des Laserstrahls (2) auf das Werkstück (3) ausgebildet ist.

19. Vorrichtung nach Anspruch 18, bei welcher eine Düseninnenkontur (5b) der Laserbearbeitungsdüse (5) die Referenzkontur bildet.

20. Vorrichtung nach einem der vorhergehenden Ansprüche, bei welcher die Bilderfassungseinrichtung (9) mindestens einen Detektor, insbesondere eine Kamera (12), mit einer Detektorfläche (12a) aufweist, an der das mindestens eine Bild (B1 bis B4, B) erzeugt wird.

21. Vorrichtung nach einem der Ansprüche 3 bis 20, bei welcher die Auswerteeinrichtung (19) ausgebildet ist, durch vergleichende Auswertung der aufgenommenen Bilder (B1 bis B4, B) einen Abstand (D) zwischen der Referenzkontur (5a) und der Oberseite (3a) des Werkstücks (3) zu bestimmen.

22. Vorrichtung nach einem der vorhergehenden Ansprüche, weiter umfassend: eine Einrichtung (21) zur Veränderung der Fokusposition (F, F', F") des Hochenergiestrahls (2) in Strahlrichtung (13), sowie
eine Steuer- und/oder Regeleinrichtung (20) zur Steuerung und/oder Regelung der Fokusposition (F', F") des Hochenergiestrahls (2) an eine Soll-Fokusposition (F).

23. Vorrichtung nach einem der vorhergehenden Ansprüche, weiter umfassend: eine Einrichtung (32) zur Veränderung der Fokusposition (F, F', F") der Abbildungsoptik (14) in Strahlrichtung (13) des Hochenergiestrahls (2), sowie eine Steuer- und/oder Regeleinrichtung (20) zur Steuerung und/oder Regelung der Fokusposition (F', F") der Abbildungsoptik (14) an eine Soll-Fokusposition (F).

24. Verfahren zum Bestimmen einer Fokusposition (F, F', F") eines Hochenergiestrahls (2), insbesondere eines Laserstrahls, in Strahlrichtung (13) des Hochenergiestrahls (2) relativ zu einem Werkstück (3) und/oder relativ zu einer Referenzkontur (5b) einer Vorrichtung (1), die ein Fokussierelement (4) zur Fokussierung des Hochenergiestrahls (2) auf das Werkstück (3) aufweist, umfassend:
Erfassen eines zu überwachenden Bereichs (15) an der Oberfläche (3a) des Werkstücks (3) und/oder der Referenzkontur (5b) mittels eines durch das Fokussierelement (4) hindurch verlaufenden Beobachtungsstrahlengangs (7), **gekennzeichnet durch**
Erzeugen mindestens eines Bildes (B1 bis B4) des zu überwachenden Bereichs (15) und/oder der Referenzkontur (5b) durch Bilden mindestens eines Beobachtungsstrahls (7a), der einer nicht koaxial zum Hochenergiestrahl (2) verlaufenden Beobachtungsrichtung (R1) zugeordnet ist, sowie Bestimmen der Fokusposition (F, F', F") in Strahlrichtung (13) des Hochenergiestrahls (2) durch Auswerten des mindestens einen aufgenommenen Bildes (B1).

25. Verfahren nach Anspruch 24, bei dem die Fokusposition (F, F', F") in Strahlrichtung (13) des Hochenergiestrahls (2) anhand einer Position (P, P') der Referenzkontur (5b) in dem mindestens einen aufgenommenen Bild (B1) bestimmt wird.

26. Verfahren nach Anspruch 24, bei dem mindestens ein weiterer, einer weiteren Beobachtungsrichtung (R2; R) zugeordneter Beobachtungsstrahl (7b) gebildet wird, um mindestens zwei Bilder (B1 bis B4) des zu überwachenden Bereichs (15) und/oder der Referenzkontur (5b) aus mindestens zwei unterschiedlichen Beobachtungsrichtungen (R1, R2) zu erzeugen, wobei die Fokusposition (F, F', F") des Hochenergiestrahls (2) durch vergleichendes Auswerten der aufgenommenen Bilder (B1, B2; B3, B4) bestimmt wird.

## Claims

1. Device (1) for determining a focus position (F, F', F") of a high-energy beam (2), in particular a laser beam, in a beam direction (13) of the high-energy beam (2) relative to a workpiece (3) and/or relative to a reference contour (5b) of the device (1), comprising:
a focussing element (4) for focussing the high-energy beam (2) on the workpiece (3), an image recording means (9) for recording an area (15) to be monitored on the surface (3a) of the workpiece (3) and/or the reference contour (5b) by means of a monitoring beam path (9) passing through the focussing element (4), **characterized in that** the image recording means (9) is designed for forming at least one monitoring beam (7a) associated with a monitoring direction (R1) that is not coaxial with the high-energy beam (2), and imaging optics (14) for generating at least one image (B1) of the area (15) to be monitored and/or the reference contour (5b) from the at least one monitoring direction (R1), as well as
an evaluation means (19) for determining the focus position (F, F', F") in the beam direction (13) of the high-energy beam (2) by evaluating the at least one recorded image (B1).

2. Device according to claim 1, wherein the evaluation means (19) is designed for determining the focus position (F, F', F") in the beam direction (13) of the high-energy beam (2) by means of a position (P, P') of the reference contour (5b) in the at least one recorded image (B1).

3. Device according to claim 1, wherein the image recording means (9) is designed for forming at least one further monitoring beam (7b) associated with a further monitoring direction (R2; R), wherein the imaging optics (14) are designed for generating at least two images (B1, B2; B3, B4) of the area (15) to be monitored and/or of the reference contour (5b) from the at least two different monitoring directions (R1, R2), and wherein
the evaluation means (19) is designed for determining the focus position (F, F', F") of the high-energy beam (2) through comparative evaluation of the recorded images (B1, B2; B3, B4).

4. Device according to one of the preceding claims, comprising a light source (10) for illuminating the upper side (3a) of the workpiece (3), in particular in the area (15) to be monitored and/or for illuminating the reference contour (5b).

5. Device according to one of the preceding claims, wherein the monitoring beam path (7) of the image recording means (9) for recording the area (15) on the surface (3a) of the workpiece (3) to be monitored comprises an image recording area (5a) delimited by the reference contour (5b).

6. Device according to one of the claims 3 to 5, wherein the evaluation means (19) is designed for determining the focus position (F, F', F") of the high-energy beam (2) relative to the workpiece (3) through comparative evaluation of the images (B1, B2; B3, B4) of the surface (3a) of the workpiece (3) in the area (15) to be monitored.

7. Device according to one of the claims 3 to 6, wherein the imaging optics (14) comprise at least two imaging optical elements (22, 16a, 16b) associated with a respective monitoring direction (R1, R2).

8. Device according to claim 7, wherein the imaging optical elements are designed as cylinder lenses (22, 16a, 16b).

9. Device according to claim 7 or 8, wherein the imaging optical elements (22) form a lens array (24).

10. Device according to one of the claims 3 to 9, wherein the imaging optics (14) comprise a deflection means (26) with at least two beam deflection areas (26a, 26b; 26c, 26d) associated with a respective monitoring direction (R1, R2, ...).

11. Device according to claim 10, wherein the deflection means comprises at least one deflection prism (26).

12. Device according to one of the claims 3 to 11, wherein the image recording means (9) comprises a beam offsetting means (28a, 28b) for forming the at least two monitoring beams (7a, 7b) associated with a respective monitoring direction (R1, R2; R1, R).

13. Device according to one of the claims 3 to 12, wherein the image recording means (9) is designed for forming the at least two monitoring beams (7a, 7b) associated with a respective monitoring direction (R1, R2; R1, R) at different times.

14. Device according to one of the claims 3 to 13, wherein the image recording means (9) comprises at least one aperture (31) for forming the at least two monitoring beams (7a, 7b) associated with a respective monitoring direction (R1, R2; R1, R).

15. Device according to one of the claims 3 to 14, wherein the imaging optics (14) are designed for generating at least three images (B1, B2; B3, B4) of the area (15) to be monitored and/or of the reference contour (5b) from different monitoring directions (R1, R2, ...).

16. Device according to one of the preceding claims, wherein the imaging optics (14) comprise an imaging optical element (18) for generating an image (B) of the area (15) to be monitored on the surface (3a) of the workpiece (3) from a monitoring direction (R) coaxial with the high-energy beam (2).

17. Device according to claim 16, wherein the evaluation means (19) is designed for a comparative evaluation of the image (B) recorded coaxially with the high-energy beam (2) and at least one image (B1 to B4) recorded non-coaxially with the high-energy beam (2).

18. Device according to one of the preceding claims, wherein the image recording means (9) is designed for recording the at least one image (B1 to B4, B) through a nozzle opening (5a) of a laser processing nozzle (5) for passing the laser beam (2) on the workpiece (3).

19. Device according to claim 18, wherein an inner nozzle contour (5b) of the laser processing nozzle (5) forms the reference contour.

20. Device according to one of the preceding claims, wherein the image recording means (9) comprises at least one detector, in particular a camera (12), with a detector surface (12a) on which the at least one image (B1 to B4, B) is generated.

21. Device according to one of the claims 3 to 20, wherein the evaluation means (19) is designed for determining a distance (D) between the reference contour (5a) and the upper side (3a) of the workpiece (3) through comparative evaluation of the recorded images (B1 to B4, B).

22. Device according to one of the preceding claims, further comprising: a means (21) for changing the focus position (F, F', F") of the high-energy beam (2) in the beam direction (13), as well as a controller and/or regulator unit (20) for controlling and/or regulating the focus position (F', F") of the high-energy beam (2) to a target focus position (F).

23. Device according to one of the preceding claims, further comprising: a means (32) for changing the focus position (F, F', F") of the imaging optics (14) in the beam direction (13) of the high-energy beam (2), as well as a controller and/or regulator unit (20) for controlling and/or regulating the focus position (F', F") of the imaging optics (14) to a target focus position (F).

24. Method for determining a focus position (F, F', F") of a high-energy beam (2), in particular a laser beam, in a beam direction (13) of the high-energy beam (2) relative to a workpiece (3) and/or relative to a reference contour (5b) of a device (1) that comprises a focussing element (4) for focussing the high-energy beam (2) on the workpiece (3), comprising:
recording an area (15) to be monitored on the surface (3a) of the workpiece (3) and/or the reference contour (5b) by means of a monitoring beam path (7) passing through the focussing element (4),
**characterized by**
generating at least one image (B1 to B4) of the area (15) to be monitored and/or of the reference contour (5b) by forming at least one monitoring beam (7a) associated with a monitoring direction (R1) that is not coaxial with the high-energy beam (2), as well as determining the focus position (F, F', F") in the beam direction (13) of the high-energy beam (2) by evaluating the at least one recorded image (B1).

25. Method according to claim 24, wherein the focus position (F, F', F") in the beam direction (13) of the high-energy beam (2) is determined by means of a position (P, P') of the reference contour (5b) in the at least one recorded image (B1).

26. Method according to claim 24, wherein at least one further monitoring beam (7b) associated with a further monitoring direction (R2; R) is formed for generating at least two images (B1 to B4) of the area (15) to be monitored and/or of the reference contour (5b) from at least two different monitoring directions (R1, R2), wherein the focus position (F, F', F") of the high-energy beam (2) is determined through comparative evaluation of the recorded images (B1, B2; B3, B4).

## Revendications

1. Dispositif (1) pour déterminer une position focale (F, F', F") d'un faisceau à haute énergie (2), en particulier d'un faisceau laser, dans la direction de faisceau (13) du faisceau à haute énergie (2) par rapport à une pièce (3) et/ou par rapport à un contour de référence (5b) du dispositif (1), comprenant :
un élément de focalisation (4) pour focaliser le faisceau à haute énergie (2) sur la pièce (3),
un moyen de détection d'image (9) pour détecter une zone à surveiller (15) sur la surface (3a) de la pièce (3) et/ou du contour de référence (5b) au moyen d'un trajet de faisceau d'observation (7) passant à travers l'élément de focalisation (4),
**caractérisé en ce**
**que** le moyen de détection d'image (9) est conçu pour former au moins un faisceau d'observation (7a) qui est associé à une direction d'observation (R1) qui ne s'étend pas coaxialement au faisceau à haute énergie (2) et comprend une optique de formation d'image (14) pour produire au moins une image (B1) de la zone à surveiller (15) et/ou du contour de référence (5b) depuis ladite au moins une direction d'observation (R1) et
**que** le dispositif (1) comprend un moyen d'évaluation (19) pour déterminer la position focale (F, F', F") dans la direction de faisceau du faisceau à haute énergie (2) par évaluation de ladite au moins une image capturée (B1).

2. Dispositif selon la revendication 1, dans lequel le moyen d'évaluation (19) est conçu pour déterminer la position focale (F, F', F") dans la direction de faisceau (13) du faisceau à haute énergie (2) sur la base d'une position (P, P') du contour de référence (5b) dans ladite au moins une image capturée (B1).

3. Dispositif selon la revendication 1, dans lequel le moyen de détection d'image (9) est conçu pour former au moins un autre faisceau d'observation (7b) qui est associé à une autre direction d'observation (R2 ; R), l'optique de formation d'image (14) étant conçue pour produire au moins deux images (B1, B2 ; B3, B4) de la zone à surveiller (15) et/ou du contour de référence (5b) depuis lesdites au moins deux directions d'observation différentes (R1, R2) et dans lequel
le moyen d'évaluation (19) est conçu pour déterminer la position focale (F, F', F") du faisceau à haute énergie (2) par évaluation comparative des images capturées (B1, B2 ; B3, B4).

4. Dispositif selon l'une des revendications précédentes, lequel présente une source d'éclairage (10) pour éclairer la face supérieure (3a) de la pièce (3), en particulier dans la zone à surveiller (15), et/ou pour éclairer le contour de référence (5b).

5. Dispositif selon l'une des revendications précédentes, dans lequel le trajet de faisceau d'observation (7) du moyen de détection d'image (9) présente, pour détecter la zone à surveiller (15) sur la surface (3a) de la pièce (3), une zone de détection d'image (5a) qui est limitée par le contour de référence (5b).

6. Dispositif selon l'une des revendications 3 à 5, dans lequel le moyen d'évaluation (19) est conçu pour déterminer la position focale (F, F', F") du faisceau à haute énergie (2) par rapport à la pièce (3) par évaluation comparative des images (B1, B2 ; B3, B4) de la surface (3a) de la pièce (3) dans la zone à surveiller (15).

7. Dispositif selon l'une des revendications 3 à 6, dans lequel l'optique de formation d'image (14) présente au moins deux éléments optiques de formation d'image (22, 16a, 16b) associés à une direction d'observation respective (R1, R2).

8. Dispositif selon la revendication 7, dans lequel les éléments optiques de formation d'image se présentent sous la forme de lentilles cylindriques (22, 16a, 16b).

9. Dispositif selon la revendication 7 ou 8, dans lequel les éléments optiques de formation d'image (22) forment un réseau de lentilles (24).

10. Dispositif selon l'une des revendications 3 à 9, dans lequel l'optique de formation d'image (14) présente un moyen de déviation (26) avec au moins deux zones de déviation de faisceau (26a, 26b ; 26c, 26d) associées à une direction d'observation respective (R1, R2, ...).

11. Dispositif selon la revendication 10, dans lequel le moyen de déviation présente au moins un prisme de déviation (26).

12. Dispositif selon l'une des revendications 3 à 11, dans lequel le moyen de détection d'image (9) présente un moyen de décalage de faisceau (28a, 28b) pour former lesdits au moins deux faisceaux d'observation (7a, 7b) associés à une direction d'observation respective (R1, R2 ; R1, R).

13. Dispositif selon l'une des revendications 3 à 12, dans lequel le moyen de détection d'image (9) est conçu pour former lesdits au moins deux faisceaux d'observation (7a, 7b) associés à une direction d'observation respective (R1, R2 ; R1, R) à des instants différents.

14. Dispositif selon l'une des revendications 3 à 13, dans lequel le moyen de détection d'image (9) présente au moins un diaphragme (31) pour former lesdits au moins deux faisceaux d'observation (7a, 7b) associés à une direction d'observation respective (R1, R2 ; R1, R).

15. Dispositif selon l'une des revendications 3 à 14, dans lequel l'optique de formation d'image (14) est conçue pour produire au moins trois images (B1, B2 ; B3, B4) de la zone à surveiller (15) et/ou du contour de référence (5b) depuis différentes directions d'observation (R1, R2, ...).

16. Dispositif selon l'une des revendications précédentes, dans lequel l'optique de formation d'image (14) présente un élément optique de formation d'image (18) pour produire une image (B) de la zone à surveiller (15) sur la surface (3a) de la pièce (3) depuis une direction d'observation (R) coaxiale au faisceau (2) à haute énergie.

17. Dispositif selon la revendication 16, dans lequel le moyen d'évaluation (19) est conçu pour l'évaluation comparative de l'image (B) capturée coaxialement au faisceau à haute énergie (2) et d'au moins une image (B1 à B4) capturée non coaxialement au faisceau à haute énergie (2).

18. Dispositif selon l'une des revendications précédentes, dans lequel le moyen de détection d'image (9) est conçu pour capturer ladite au moins une image (B1 à B4, B) à travers une ouverture de buse (5a) d'une buse d'usinage au laser (5) pour le passage du faisceau laser (2) vers la pièce (3).

19. Dispositif selon la revendication 18, dans lequel un contour intérieur de buse (5b) de la buse d'usinage au laser (5) forme le contour de référence.

20. Dispositif selon l'une des revendications précédentes, dans lequel le moyen de détection d'image (9) présente au moins un détecteur, en particulier une caméra (12), avec une surface de détection (12a) sur laquelle ladite au moins une image (B1 à B4, B) est produite.

21. Dispositif selon l'une des revendications 3 à 20, dans lequel le moyen d'évaluation (19) est conçu pour déterminer une distance (D) entre le contour de référence (5a) et la face supérieure (3a) de la pièce (3) par évaluation comparative des images capturées (B1 à B4, B).

22. Dispositif selon l'une des revendications précédentes, comprenant en outre :
un moyen (21) pour changer la position focale (F, F', F") du faisceau à haute énergie (2) dans la direction de faisceau (13) et
un moyen de commande et/ou de réglage (20) pour commander et/ou régler la position focale (F', F") du faisceau à haute énergie (2) à une position focale de consigne (F).

23. Dispositif selon l'une des revendications précédentes, comprenant en outre :
un moyen (32) pour changer la position focale (F, F', F") de l'optique de formation d'image (14) dans la direction de faisceau (13) du faisceau à haute énergie (2) et
un moyen de commande et/ou de réglage (20) pour commander et/ou régler la position focale (F', F") de l'optique de formation d'image (14) à une position focale de consigne (F).

24. Procédé pour déterminer une position focale (F, F', F") d'un faisceau à haute énergie (2), en particulier d'un faisceau laser, dans la direction de faisceau (13) du faisceau à haute énergie (2) par rapport à une pièce (3) et/ou par rapport à un contour de référence (5b) d'un dispositif (1) qui présente un élément de focalisation (4) pour focaliser le faisceau à haute énergie (2) sur la pièce (3), consistant à :
détecter une zone à surveiller (15) sur la surface (3a) de la pièce (3) et/ou du contour de référence (5b) au moyen d'un trajet de faisceau d'observation (7) passant à travers l'élément de focalisation (4),
**caractérisé par** les étapes consistant à
produire au moins une image (B1 à B4) de la zone à surveiller (15) et/ou du contour de référence (5b) en formant au moins un faisceau d'observation (7a) qui est associé à une direction d'observation (R1) qui ne s'étend pas coaxialement au faisceau à haute énergie (2) et
déterminer la position focale (F, F', F") dans la direction de faisceau (13) du faisceau à haute énergie (2) par évaluation de ladite au moins une image capturée (B1).

25. Procédé selon la revendication 24, dans lequel la position focale (F, F', F") dans la direction de faisceau (13) du faisceau à haute énergie (2) est déterminée sur la base d'une position (P, P') du contour de référence (5b) dans ladite au moins une image capturée (B1).

26. Procédé selon la revendication 24, dans lequel au moins un autre faisceau d'observation (7b) associé à une autre direction d'observation (R2 ; R) est formé pour produire au moins deux images (B1 à B4) de la zone à surveiller (15) et/ou du contour de référence (5b) depuis au moins deux directions d'observation différentes (R1, R2), la position focale (F, F', F") du faisceau à haute énergie (2) étant déterminée par évaluation comparative des images capturées (B1, B2 ; B3, B4).
